# EUROPEAN PATENT APPLICATION

(11) **EP 4 561 117 A1**
(43) Date of publication of application: **28.05.2025**
(21) Application number: 23845066.2
(22) Date of filing: 01.06.2023
(51) Int. Cl.: H04W 4/02, H04W 88/04, G01S 5/00, G01S 5/02, H04W 4/40, H04W 64/00

(54) **COMMUNICATION METHOD AND COMMUNICATION APPARATUS**

(30) Priority: 28.07.2022 CN 202210896861
(71) Applicant: Huawei Technologies Co., Ltd., Shenzhen, Guangdong 518129 (CN)
(72) Inventor: XU, Shengfeng, Shenzhen, Guangdong 518129 (CN)
(74) Representative: Gill Jennings & Every LLP
(86) International application number: PCT/CN2023/097694
(87) International publication number: WO 2024/021853

(57) **Abstract**

This application provides a communication method and a communication apparatus. The method includes: A first terminal device obtains a first parameter, where the first parameter includes at least one of first ranging accuracy, first ranging time, and a ranging quality of service class that correspond to ranging between the first terminal device and a second terminal device. The first terminal device determines a first ranging mode from a plurality of ranging modes based on the first parameter. The first terminal device performs ranging between the first terminal device and the second terminal device based on the first ranging mode. According to the method in embodiments of this application, a ranging mode in which a terminal device performs ranging can better meet a requirement of a ranging service.

## Description

This application claims priority to Chinese Patent Application No. 202210896861.7, filed with the China National Intellectual Property Administration on July 28, 2022 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus in the communication field.

### BACKGROUND

With rapid development of mobile communication, widespread use of new service types, for example, data services such as video chat, virtual reality (virtual reality, VR), and augmented reality (augmented reality, AR), increases a bandwidth requirement of a user. Device-to-device (device-to-device, D2D) communication allows direct communication between user equipment (user equipment, UE). Within a short distance range, a sender UE and a receiver UE may directly communicate with each other after mutual discovery. Communication between UEs may be performed through a proximity-based services communication 5 (proximity-based services communication 5, PC5) interface, which may be used for information transmission on a data plane and a control plane. A distance between the UEs may also be measured through a PC5 interface, to obtain a relative distance between the UEs.

In some location scenarios, the distance between the UEs needs to be measured. A manner of measuring the distance between the UEs includes single-side two-way ranging (single-side two-way ranging), double-side two-way ranging (double-side two-way ranging), and the like. Currently, there is no related technical solution for determining a proper ranging mode. Consequently, a requirement of a location service cannot be better met.

### SUMMARY

Embodiments of this application provide a communication method and apparatus, to better meet a requirement of a location service.

According to a first aspect, a communication method is provided. The method may be performed by a first terminal device, or may be performed by a component (for example, a processor, a chip, or a chip system) of a first terminal device, or may be implemented by a logical module or software that can implement a part or all of functions of a first terminal device. The method includes: The first terminal device obtains a first parameter, where the first parameter includes at least one of first ranging accuracy, first ranging time, and a ranging quality of service class, and the first parameter is used for ranging between the first terminal device and a second terminal device. The first terminal device determines a first ranging mode from a plurality of ranging modes based on the first parameter. The first terminal device performs ranging between the first terminal device and the second terminal device based on the first ranging mode.

Specifically, the first terminal device may determine the first ranging mode based on a mapping table or a correspondence between the accuracy, the time, the quality of service class, and the ranging mode that are included in the first parameter. The correspondence or the mapping table may be locally preconfigured or obtained from a core network element (for example, a policy control function (policy control function, PCF) network element).

Specifically, the quality of service class may be a location quality of service level, and the location quality of service level includes a strict level, a non-strict level, a best effort level, an assured level, and the like.

Specifically, the foregoing "the first terminal device performs ranging between the first terminal device and the second terminal device based on the first ranging mode" may indicate that the first terminal device receives and sends a ranging signal or collects related ranging information (for example, time of flight information) in a ranging process based on a ranging procedure corresponding to the first ranging mode. The related ranging information may be used by the first terminal device to calculate a distance between the first terminal device and the second terminal device, and the related ranging information may be further used by another network element to calculate the distance between the first terminal device and the second terminal device.

The plurality of ranging methods may include single-side two-way ranging (single-side two-way ranging), double-side two-way ranging (double-side two-way ranging), and the like.

According to the foregoing method, the first terminal device may perform ranging in a ranging mode that better meets a requirement of a ranging service.

With reference to the first aspect, in some implementations of the first aspect, the method further includes: The first terminal device receives a first message, where the first message includes the first parameter.

Specifically, the first terminal device may obtain the first parameter from an application layer of the first terminal device, or may include the first parameter in a first message obtained from a location management network element, or may include the first parameter in a first message obtained from another terminal device.

Specifically, the first message may be a ranging request message.

The first parameter is carried in the first message, so that signaling overheads for separately sending the first parameter are reduced.

With reference to the first aspect, in some implementations of the first aspect, that the first terminal device determines a first ranging mode from a plurality of ranging modes based on the first parameter further includes: The first terminal device obtains a second parameter, where the second parameter includes at least one of a ranging mode authorized by a network to the first terminal device, a ranging mode authorized by the network to the second terminal device, a ranging mode supported by the first terminal device, or a ranging mode supported by the second terminal device. The first terminal device determines the first ranging mode based on the first parameter and the second parameter.

Specifically, the ranging mode supported by the first terminal device may be represented as a ranging capability of the first terminal device, and the ranging mode supported by the second terminal device may be represented as a ranging capability of the second terminal device.

Specifically, the first terminal device may determine, as the first ranging mode, a ranging mode authorized to both the first terminal device and the second terminal device, or the first terminal device may determine, as the first ranging mode, a ranging mode supported by both the first terminal device and the second terminal device.

According to the foregoing method, the first terminal device may not only select a ranging mode based on a requirement of the first parameter, but also perform ranging by using, with reference to a ranging mode authorized to a terminal device and a ranging mode supported by the terminal device, a ranging mode that better meets a requirement. Therefore, latency and signaling overheads for reselection because the selected ranging mode does not meet the requirement are reduced.

With reference to the first aspect, in some implementations of the first aspect, when the second parameter includes the ranging mode authorized by the network to the first terminal device, the method further includes: The first terminal device receives a second message, where the second message includes the second parameter.

Specifically, the first terminal device may receive the second message from a mobility management network element, where the second message includes the second parameter. The mobility management network element receives the second parameter from a policy control network element by using another message.

The first terminal device may obtain, from the policy control network element, the ranging mode authorized by the network to the first terminal device. The ranging mode authorized by the network to the first terminal device may be used as a reference for the first terminal device to determine the first ranging mode, to assist the first terminal device in selecting, for ranging, the ranging mode authorized by the network. Therefore, latency and signaling overheads for reselection because the selected ranging mode does not meet the requirement are reduced.

With reference to the first aspect, in some implementations of the first aspect, when the second parameter includes the ranging mode supported by the second terminal device and/or the ranging mode authorized by the network to the second terminal device, the method further includes: The first terminal device receives a third message of the second terminal device, where the third message includes the second parameter.

Specifically, the second terminal device may obtain, from the policy control network element, the ranging mode authorized by the network to the second terminal device.

The second terminal device may send, to the first terminal device, the ranging mode authorized by the network to the second terminal device and the ranging mode supported by the second terminal device, which are used as a reference for the first terminal device to determine the first ranging mode, to assist the first terminal device in selecting, for ranging, the ranging mode authorized by the network. Therefore, latency and signaling overheads for reselection because the selected ranging mode does not meet the requirement are reduced.

With reference to the first aspect, in some implementations of the first aspect, the first message may be from a first location management network element, and the first location management network element is a location management network element serving the first terminal device.

Specifically, the first message may be sent by the first location management network element to the first terminal device when the first location management network element locates the first terminal device, and is used for the ranging between the first terminal device and the second terminal device.

The first location management network element may assist, by sending, to the first terminal device, the first message used for the ranging between the first terminal device and the second terminal device, the first location management network element in locating the first terminal device.

According to a second aspect, a communication method is provided. The method may be performed by a first terminal device, or may be performed by a component (for example, a processor, a chip, or a chip system) of a first terminal device, or may be implemented by a logical module or software that can implement a part or all of functions of a first terminal device. The method includes: The first terminal device obtains a third parameter, where the third parameter includes at least one of second ranging accuracy, second ranging time, and a ranging quality of service class, and the third parameter is used for ranging between the first terminal device and a third terminal device. The first terminal device determines a fourth parameter or a third ranging mode based on the third parameter, where the fourth parameter is used for determining the third ranging mode, and the third ranging mode is used for ranging between a second terminal device and the third terminal device. The first terminal device sends the third ranging mode or the fourth parameter to the second terminal device or the third terminal device.

Specifically, the first terminal device may determine the third ranging mode based on a mapping table or a correspondence between the accuracy, the time, the quality of service class, and the ranging mode that are included in the third parameter. The correspondence or the mapping table may be locally preconfigured or obtained from a core network element (for example, a PCF).

Specifically, the quality of service class may be a location quality of service level, and the location quality of service level includes a strict level, a non-strict level, a best effort level, an assured level, and the like.

Specifically, the foregoing "the third ranging mode is used for ranging between a second terminal device and the third terminal device" may indicate that the second terminal device or the third terminal device receives and sends a ranging signal or collects related ranging information (for example, time of flight information) in a ranging process based on a ranging procedure corresponding to the third ranging mode. The related ranging information may be used by the second terminal device or the third terminal device to calculate a distance between the second terminal device and the third terminal device, and the related ranging information may be further used by the first terminal device or another network element to calculate the distance between the second terminal device and the third terminal device.

It should be understood that the foregoing method is applicable to a scenario in which the second terminal device is required, when direct ranging (direct ranging) cannot be supported due to an obstacle or the like between the first terminal device and the third terminal device, to assist in ranging.

According to the foregoing method, the first terminal device may select, for the ranging between the second terminal device and the third terminal device, a ranging mode that better meets a requirement of a ranging service.

With reference to the second aspect, in some implementations of the second aspect, the method further includes: The first terminal device receives a fourth message, where the fourth message includes the third parameter.

Specifically, the first terminal device may obtain the third parameter from an application layer of the first terminal device, or may include the third parameter in a fourth message obtained from a location management network element, or may include the third parameter in a fourth message obtained from another terminal device.

Specifically, the fourth message may be a ranging request message.

The third parameter is carried in the fourth message, so that signaling overheads for separately sending the third parameter are reduced.

With reference to the second aspect, in some implementations of the second aspect, when the third parameter includes the second ranging accuracy, that the first terminal device determines a third ranging mode based on the third parameter includes: The first terminal device determines third ranging accuracy based on the second ranging accuracy. The first terminal device determines the third ranging mode from a plurality of ranging modes based on the third ranging accuracy.

Specifically, the third ranging accuracy may be higher than the second ranging accuracy. This is not limited in this application.

The plurality of ranging methods may include single-side two-way ranging (single-side two-way ranging), double-side two-way ranging (double-side two-way ranging), and the like.

The first terminal device determines the third ranging accuracy with higher accuracy based on the second ranging accuracy in the third parameter. The third ranging accuracy is used for determining a ranging mode between the second terminal device and the third terminal device. Therefore, it can be ensured that ranging accuracy between the second terminal device and the third terminal device meets a requirement of a ranging service as much as possible.

With reference to the second aspect, in some implementations of the second aspect, when the third parameter includes the second ranging time, that the first terminal device determines a third ranging mode based on the third parameter includes: The first terminal device determines third ranging time based on the second ranging time. The first terminal device determines the third ranging mode from a plurality of ranging modes based on the third ranging time.

Specifically, the third ranging time may be earlier than the second ranging time. This is not limited in this application.

The first terminal device determines the third ranging time with a stricter time requirement based on the second ranging time in the third parameter. The third ranging time is used for determining a ranging mode between the second terminal device and the third terminal device. Therefore, it can be ensured that ranging time between the second terminal device and the third terminal device meets a requirement of a ranging service as much as possible.

With reference to the second aspect, in some implementations of the second aspect, the method further includes: The first terminal device determines a fifth parameter or a fourth ranging mode based on the third parameter, where the fifth parameter is used for determining the fourth ranging mode, and the fourth ranging mode is used for ranging between the first terminal device and the second terminal device.

Specifically, the foregoing "the fourth ranging mode is used for ranging between the first terminal device and the second terminal device" may indicate that the first terminal device receives and sends a ranging signal or collects related ranging information (for example, time of flight information) in a ranging process based on a ranging procedure corresponding to the fourth ranging mode. The related ranging information may be used by the first terminal device to calculate a distance between the first terminal device and the second terminal device, and the related ranging information may be further used by another network element to calculate the distance between the first terminal device and the second terminal device.

It should be understood that the foregoing method is applicable to a scenario in which the second terminal device is required, when direct ranging (direct ranging) cannot be supported due to an obstacle or the like between the first terminal device and the third terminal device, to assist in ranging.

According to the foregoing method, the first terminal device may select, for the ranging between the first terminal device and the second terminal device, a ranging mode that better meets a requirement of a ranging service.

With reference to the second aspect, in some implementations of the second aspect, the method further includes: The first terminal device sends the fifth parameter or the fourth ranging mode to the second terminal device. The first terminal device receives a ranging result obtained by the second terminal device based on the fifth parameter or the fourth ranging mode.

The first terminal device may send, to the second terminal device, the fifth parameter used for determining the fourth ranging mode, or may directly send the fourth ranging mode to the second terminal device. In view of this, the second terminal device may perform ranging between the first terminal device and the second terminal device, to obtain a more accurate ranging result.

With reference to the second aspect, in some implementations of the second aspect, when the third parameter includes the second ranging accuracy, that the first terminal device determines a fourth ranging mode based on the third parameter includes: The first terminal device determines fourth ranging accuracy based on the second ranging accuracy. The first terminal device determines the fourth ranging mode from a plurality of ranging modes based on the fourth ranging accuracy.

Specifically, the fourth ranging accuracy may be higher than the second ranging accuracy. This is not limited in this application.

The plurality of ranging methods may include single-side two-way ranging (single-side two-way ranging), double-side two-way ranging (double-side two-way ranging), and the like.

The first terminal device determines the fourth ranging accuracy with higher accuracy based on the second ranging accuracy in the third parameter. The fourth ranging accuracy is used for determining a ranging mode between the first terminal device and the second terminal device. Therefore, it can be ensured that ranging accuracy between the first terminal device and the second terminal device meets a requirement of a ranging service as much as possible.

With reference to the second aspect, in some implementations of the second aspect, when the third parameter includes the second ranging time, that the first terminal device determines a fourth ranging mode based on the third parameter includes: The first terminal device determines the fourth ranging mode from a plurality of ranging modes based on the second ranging time.

The first terminal device directly uses the second ranging time in the third parameter to determine the ranging mode between the first terminal device and the second terminal device, so that operation complexity of the first terminal device can be reduced.

Optionally, when the third parameter includes the second ranging time, that the first terminal device determines a fourth ranging mode based on the third parameter includes: The first terminal device determines fifth ranging time based on the second ranging time. The first terminal device determines the fourth ranging mode from a plurality of ranging modes based on the fifth ranging time.

Specifically, the fifth ranging time may be earlier than the second ranging time. This is not limited in this application.

The first terminal device determines the fifth ranging time with a stricter time requirement based on the second ranging time in the third parameter. The fifth ranging time is used for determining a ranging mode between the first terminal device and the second terminal device. Therefore, it can be ensured that ranging time between the first terminal device and the second terminal device meets a requirement of a ranging service as much as possible.

With reference to the second aspect, in some implementations of the second aspect, the method further includes: The first terminal device obtains fifth ranging accuracy and sixth ranging accuracy, where the fifth ranging accuracy is actual ranging accuracy of the ranging between the first terminal device and the second terminal device, and the sixth ranging accuracy is actual ranging accuracy of the ranging between the second terminal device and the third terminal device. The first terminal device calculates seventh ranging accuracy based on the fifth ranging accuracy and the sixth ranging accuracy, where the seventh ranging accuracy is actual ranging accuracy of the ranging between the first terminal device and the third terminal device.

Specifically, the fifth ranging accuracy may be determined based on an actual ranging result between the first terminal device and the second terminal device, and the sixth ranging accuracy may be determined based on an actual ranging result between the second terminal device and the third terminal device.

The first terminal device may flexibly adjust allocation of ranging accuracy or a ranging mode based on actual ranging accuracy between the first terminal device and the third terminal device, so that final ranging accuracy meets a requirement of a location service as much as possible.

With reference to the second aspect, in some implementations of the second aspect, that the first terminal device obtains fifth ranging accuracy and sixth ranging accuracy includes: The first terminal device receives the fifth ranging accuracy of the second terminal device, and/or the first terminal device receives the sixth ranging accuracy of the second terminal device or the third terminal device.

Specifically, the second terminal device may determine the fifth ranging accuracy based on the actual ranging result between the first terminal device and the second terminal device, and send the fifth ranging accuracy to the first terminal device; and the second terminal device or the third terminal device may determine the sixth ranging accuracy based on the actual ranging result between the second terminal device and the third terminal device, and send the sixth ranging accuracy to the first terminal device. In this way, operation complexity for the first terminal device to calculate the actual ranging accuracy between the first terminal device and the third terminal device can be reduced.

According to a third aspect, a communication method is provided. The method may be performed by a first location management network element, or may be performed by a component (for example, a processor, a chip, or a chip system) of a first location management network element, or may be implemented by a logical module or software that can implement a part or all of functions of a first location management network element. The method includes: The first location management network element obtains a sixth parameter, where the sixth parameter includes at least one of first location accuracy, first location time, and a location quality of service class, and the sixth parameter is used for locating a first terminal device. The first location management network element determines a seventh parameter or a first ranging mode based on the sixth parameter, where the seventh parameter is used for determining the first ranging mode, the first ranging mode is used for ranging between the first terminal device and a second terminal device, and the second terminal device is configured to assist in locating the first terminal device. The first location management network element sends the first ranging mode or the seventh parameter.

Specifically, the first location management network element may determine the first ranging mode based on a mapping table or a correspondence between the accuracy, the time, the quality of service class, and the ranging mode that are included in the sixth parameter. The correspondence or the mapping table may be locally preconfigured or obtained from a core network element (for example, a PCF).

Specifically, the quality of service class may be a location quality of service level, and the location quality of service level includes a strict level, a non-strict level, a best effort level, an assured level, and the like.

Specifically, the foregoing "the first ranging mode is used for ranging between the first terminal device and a second terminal device" may indicate that the first terminal device or the second terminal device receives and sends a ranging signal or collects related ranging information (for example, time of flight information) in a ranging process based on a ranging procedure corresponding to the first ranging mode. The related ranging information may be used by the first terminal device or the second terminal device to calculate a distance between the first terminal device and the second terminal device, and the related ranging information may be further used by the first location management network element to calculate the distance between the first terminal device and the second terminal device.

It should be understood that, if the first location management network element sends the seventh parameter or the first ranging mode to the first terminal device, the first terminal device may receive and send a ranging signal or collect related ranging information (for example, time of flight information) in a ranging process based on a ranging procedure corresponding to the first ranging mode; or if the first location management network element sends the seventh parameter or the first ranging mode to the second terminal device, the second terminal device may receive and send a ranging signal or collect related ranging information (for example, time of flight information) in a ranging process based on a ranging procedure corresponding to the first ranging mode.

It should be understood that the foregoing method is applicable to a case in which the first location management network element initiates location of the first terminal device and the first location management network element may locate the first terminal device in a hybrid location mode when location accuracy cannot meet a requirement of a location service. The hybrid location mode may include location of the second terminal device and ranging of the first terminal device and the second terminal device.

According to the foregoing method, the first location management network element may perform ranging between the first terminal device and the second terminal device in a ranging mode that better meets a requirement of a ranging service.

With reference to the third aspect, in some implementations of the third aspect, the method further includes: The first location management network element receives a fifth message, where the fifth message includes the sixth parameter.

Specifically, the first location management network element may include the sixth parameter in a fifth message received from a mobility management network element, or may include the sixth parameter in a fifth message received from a gateway mobile location center (gateway mobile location center, GMLC).

Specifically, the fifth message may be a location request message.

The sixth parameter is carried in the fifth message, so that signaling overheads for separately sending the sixth parameter are reduced.

With reference to the third aspect, in some implementations of the third aspect, when the sixth parameter includes the first location accuracy, that the first location management network element determines a first ranging mode based on the sixth parameter includes: The first location management network element determines eighth ranging accuracy based on the first location accuracy. The first location management network element determines the first ranging mode from a plurality of ranging modes based on the eighth ranging accuracy.

Specifically, the eighth ranging accuracy may be higher than the first location accuracy. This is not limited in this application.

The plurality of ranging methods may include single-side two-way ranging (single-side two-way ranging), double-side two-way ranging (double-side two-way ranging), and the like.

The first location management network element determines the eighth ranging accuracy with higher accuracy based on the first location accuracy in the sixth parameter. The eighth ranging accuracy is used for determining a ranging mode between the first terminal device and the second terminal device. Therefore, it can be ensured that ranging accuracy between the first terminal device and the second terminal device meets a requirement of a location service as much as possible.

With reference to the third aspect, in some implementations of the third aspect, when the sixth parameter includes the first location time, that the first location management network element determines a first ranging mode based on the sixth parameter includes: The first location management network element determines fourth ranging time based on the first location time. The first location management network element determines the first ranging mode from a plurality of ranging modes based on the fourth ranging time.

Specifically, the fourth ranging time may be earlier than the first location time. This is not limited in this application.

The first location management network element determines the fourth ranging time with a stricter time requirement based on the first location time in the sixth parameter. The fourth ranging time is used for determining a ranging mode between the first terminal device and the second terminal device. Therefore, it can be ensured that ranging time between the first terminal device and the second terminal device meets a requirement of a location service as much as possible.

With reference to the third aspect, in some implementations of the third aspect, the method further includes: The first location management network element determines an eighth parameter or a first location method based on the sixth parameter, where the eighth parameter is used for determining the first location method, and the first location method is used for locating the second terminal device. The first location management network element sends the eighth parameter or the first location method.

Specifically, the foregoing "the first location method is used for locating the second terminal device" may indicate that the second terminal device collects related measurement information (for example, time of flight information) in a location process. The related measurement information may be used by the second terminal device to estimate a location of the second terminal device, and the related ranging information may be further used by a second location management network element serving the second terminal device to estimate the location of the second terminal device.

It should be understood that the foregoing method is applicable to a case in which the first location management network element initiates location of the first terminal device and the first location management network element may locate the first terminal device in a hybrid location mode when location accuracy cannot meet a requirement of a location service. The hybrid location mode may include location of the second terminal device and ranging of the first terminal device and the second terminal device.

According to the foregoing method, the second terminal device may be located by using a location method that better meets a requirement of a location service.

With reference to the third aspect, in some implementations of the third aspect, the method further includes: When the sixth parameter includes the first location accuracy, that the first location management network element determines a first location method based on the sixth parameter includes: The first location management network element determines second location accuracy based on the first location accuracy. The first location management network element determines the first location method from a plurality of location methods based on the second location accuracy.

Specifically, the second location accuracy may be higher than the first location accuracy. This is not limited in this application.

The plurality of location methods may include multi-cell round trip time (Multi-Round Trip Time, Multi-RTT), downlink time difference of arrival (Downlink time difference of arrival, DL-TDOA), uplink time difference of arrival (Uplink time difference of arrival, UL-TDOA), and the like.

The first location management network element determines the second location accuracy with higher accuracy based on the first location accuracy in the sixth parameter. The second location accuracy is used for determining a location method of the second terminal device. Therefore, it can be ensured that location accuracy of the second terminal device meets a requirement of a location service as much as possible.

With reference to the third aspect, in some implementations of the third aspect, when the sixth parameter includes the first location time, that the first location management network element determines a first location method based on the sixth parameter includes: The first location management network element determines the first location method from a plurality of location methods based on the first location time.

The first location management network element directly uses the first location time in the sixth parameter to determine the location method of the second terminal device, so that operation complexity of the first location management network element can be reduced.

Optionally, when the sixth parameter includes the first location time, that the first location management network element determines a first location method based on the sixth parameter includes: The first location management network element determines second location time based on the first location time. The first terminal device determines the first location method from a plurality of location modes based on the second location time.

Specifically, the second location time may be earlier than the first location time. This is not limited in this application.

The first location management network element determines the second location time with a stricter time requirement based on the first location time in the sixth parameter. The second location time is used for determining a location method of the second terminal device. Therefore, it can be ensured that the second terminal device meets a requirement of a location service as much as possible.

With reference to the third aspect, in some implementations of the third aspect, the method further includes: The first location management network element obtains ninth ranging accuracy and third location accuracy, where the ninth ranging accuracy is actual ranging accuracy of the ranging between the first terminal device and the second terminal device, and the third location accuracy is actual location accuracy of the second terminal device. The first location management network element calculates fourth location accuracy based on the ninth ranging accuracy and the third location accuracy, where the fourth location accuracy is actual location accuracy of the first terminal device. The first location management network element sends the fourth location accuracy to a first mobility management network element, where the first mobility management network element is a mobility management network element serving the first terminal device.

Specifically, the ninth ranging accuracy may be determined based on an actual ranging result between the first terminal device and the second terminal device, and the third location accuracy may be determined based on an actual location result of the second terminal device.

The first location management network element may flexibly adjust allocation of ranging accuracy, location accuracy, a ranging mode, and a location method based on the actual location accuracy of the first terminal device, so that final location accuracy of the first terminal device meets a requirement of a location service as much as possible.

With reference to the third aspect, in some implementations of the third aspect, that the first location management network element obtains ninth ranging accuracy and third location accuracy includes: The first location management network element receives the ninth ranging accuracy of the first terminal device or the second terminal device, and/or the first location management network element receives the third location accuracy of a second location management network element, where the second location management network element is a location management network element serving the second terminal device.

Specifically, the first terminal device or the second terminal device may determine the ninth ranging accuracy based on the actual ranging result between the first terminal device and the second terminal device, and send the ninth ranging accuracy to the first location management network element; and the second terminal device may determine the third location accuracy based on the actual location result of the second terminal device, and send the third location accuracy to the first location management network element. In this way, operation complexity for the first location management network element to calculate the actual location accuracy of the first terminal device can be reduced.

According to a fourth aspect, a communication apparatus is provided. The apparatus may be a first terminal device, or may be a component (for example, a processor, a chip, or a chip system) of a terminal device, or may be a logical module or software that can implement a part or all of functions of a terminal device. The apparatus has a function of implementing the first aspect, the second aspect, and the possible implementations of the first aspect and the second aspect. The function may be implemented by hardware, or may be implemented by hardware executing corresponding software. The hardware or the software includes one or more modules corresponding to the function.

In a possible design, the apparatus includes: an interface unit and a processing unit. The interface unit may be at least one of a transceiver, a receiver, and a transmitter. The interface unit may include a radio frequency circuit or an antenna. The processing unit may be a processor. Optionally, the apparatus may further include a storage unit, where the storage unit may be, for example, a memory. When the storage unit is included, the storage unit is configured to store a program or instructions. The processing unit is connected to the storage unit, and the processing unit may execute the program or the instructions stored in the storage unit or instructions from another device, to enable the apparatus to perform the communication method according to the first aspect, the second aspect, and the possible implementations of the first aspect and the second aspect. In this design, the apparatus may be a first terminal device.

In another possible design, when the apparatus is a chip, the chip includes: an interface unit and a processing unit. The interface unit may be, for example, an input/output interface, a pin, or a circuit, on the chip. The processing unit may be, for example, a processor. The processing unit may execute instructions, to enable the chip in a first terminal device to perform the communication method according to any one of the first aspect, the second aspect, and the possible implementations of the first aspect and the second aspect. Optionally, the processing unit may execute instructions in a storage unit, where the storage unit may be a storage module, for example, a register or a cache, in the chip. The storage unit may alternatively be located inside a communication device but outside the chip, for example, a read-only memory (read-only memory, ROM) or another type of static storage device that can store static information and instructions, or a random access memory (random access memory, RAM).

The processor mentioned anywhere above may be a general-purpose central processing unit (CPU), a microprocessor, an application-specific integrated circuit (application-specific integrated circuit, ASIC), or one or more integrated circuits configured to control program execution of the communication methods according to the foregoing aspects.

According to a fifth aspect, a communication apparatus is provided. The apparatus may be a first location management network element, or may be a component (for example, a processor, a chip, or a chip system) of a first location management network element, or may be a logical module or software that can implement a part or all of functions of a first location management network element. The apparatus has a function of implementing the third aspect and the possible implementations of the third aspect. The function may be implemented by hardware, or may be implemented by hardware executing corresponding software. The hardware or the software includes one or more modules corresponding to the function.

In a possible design, the apparatus includes: an interface unit and a processing unit. The interface unit may be at least one of a transceiver, a receiver, and a transmitter. The interface unit may include a radio frequency circuit or an antenna. The processing unit may be a processor. Optionally, the apparatus may further include a storage unit, where the storage unit may be, for example, a memory. When the storage unit is included, the storage unit is configured to store a program or instructions. The processing unit is connected to the storage unit, and the processing unit may execute the program or the instructions stored in the storage unit or instructions from another device, to enable the apparatus to perform the communication method according to the third aspect and the possible implementations of the third aspect. In this design, the apparatus may be a first location management network element.

In another possible design, when the apparatus is a chip, the chip includes: an interface unit and a processing unit. The interface unit may be, for example, an input/output interface, a pin, or a circuit, on the chip. The processing unit may be, for example, a processor. The processing unit may execute instructions, to enable the chip in a first location management network element to perform the communication method according to any one of the third aspect and the possible implementations of the third aspect. Optionally, the processing unit may execute instructions in a storage unit, where the storage unit may be a storage module, for example, a register or a cache, in the chip. The storage unit may alternatively be located inside a communication device but outside the chip, for example, a read-only memory (read-only memory, ROM) or another type of static storage device that can store static information and instructions, or a random access memory (random access memory, RAM).

The processor mentioned anywhere above may be a general-purpose central processing unit (CPU), a microprocessor, an application-specific integrated circuit (application-specific integrated circuit, ASIC), or one or more integrated circuits configured to control program execution of the communication methods according to the foregoing aspects.

According to a sixth aspect, a computer storage medium is provided. The computer storage medium stores program code. The program code indicates instructions of performing the method according to any one of the first aspect, the second aspect, the third aspect, and the possible implementations of the first aspect, the second aspect, and the third aspect.

According to a seventh aspect, a computer program product including computer instructions or computer code is provided. When the computer program product runs on a computer, the computer is enabled to perform the method according to any one of the first aspect, the second aspect, the third aspect, and the possible implementations of the first aspect, the second aspect, and the third aspect.

According to an eighth aspect, a communication system is provided. The communication system includes an apparatus that has a function of implementing the method and the possible designs according to the first aspect, an apparatus that has a function of implementing the method and the possible designs according to the second aspect, and an apparatus that has a function of implementing the method and the possible designs according to the third aspect. An apparatus that has functions of implementing the methods according to the first aspect and the second aspect and the possible designs according to the first aspect and the second aspect may be a first terminal device, and the apparatus that has the function of implementing the third aspect and the possible designs according to the third aspect may be a first location management network element.

Specifically, for beneficial effects of another aspect, reference may be made to the beneficial effects described in the first aspect, the second aspect, and the third aspect.

Based on the foregoing technical solutions, ranging accuracy is properly allocated or a ranging mode is properly set, so that ranging can be performed in a ranging mode that better meets a requirement of a ranging service, to obtain a ranging result with higher accuracy, thereby meeting a requirement of a ranging or location service as much as possible.

### BRIEF DESCRIPTION OF DRAWINGS

FIG. 1 is an example of an architecture of a communication system applicable to this application;
FIG. 2 is a diagram of a network service-based architecture applicable to this application for supporting location;
FIG. 3 is a schematic flowchart of determining a ranging method according to this application;
FIG. 4 is another schematic flowchart of determining a ranging method according to this application;
FIG. 5 is still another schematic flowchart of determining a ranging method according to this application;
FIG. 6 is another schematic flowchart of determining a ranging method according to this application;
FIG. 7 is still another schematic flowchart of determining a ranging method according to this application;
FIG. 8 is a block diagram of an information sending apparatus 100 according to this application; and
FIG. 9 is a block diagram of an information receiving apparatus 200 according to this application.

### DESCRIPTION OF EMBODIMENTS

The following describes technical solutions of this application with reference to accompanying drawings.

The technical solutions in embodiments of this application are applicable to various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, a new radio (new radio, NR) system, or a future communication system.

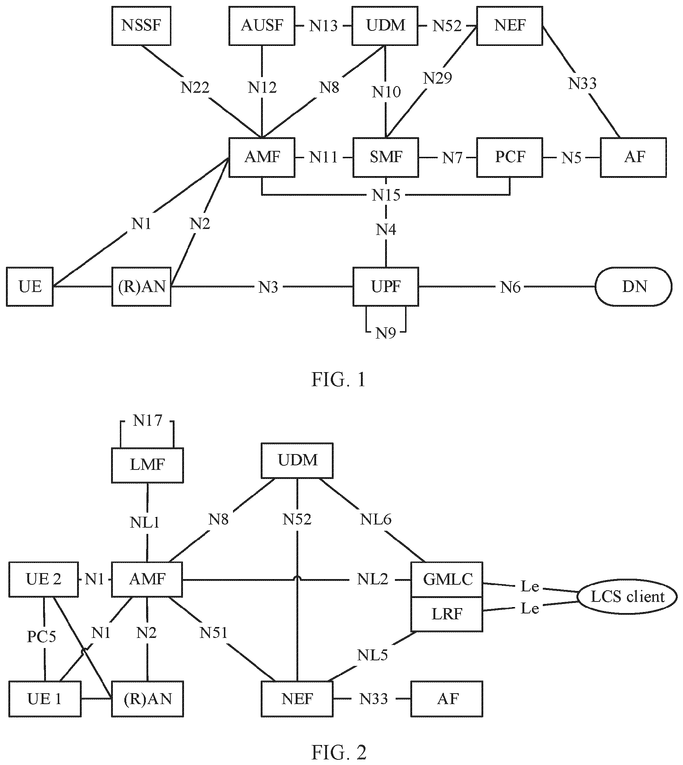

FIG. 1 is an example of an architecture of a communication system applicable to an embodiment of this application. Functions of a terminal device and network entities are described below.

The terminal device may be referred to as a terminal (terminal), a terminal device unit (subscriber unit), a terminal device station, a terminal device agent, a terminal device apparatus, an access terminal, a terminal in V2X communication, a subscriber unit, user equipment (user equipment, UE), a subscriber station, a mobile station (mobile station, MS), a remote station, a remote terminal, a mobile device, a user terminal, a wireless communication device, a user agent, or a user apparatus.

The terminal device in this embodiment of this application may alternatively be a mobile phone (mobile phone), a tablet computer (pad), a computer having a wireless transceiver function, a holographic projector, a video player, a virtual reality (virtual reality, VR) terminal, an augmented reality (augmented reality, AR) terminal, a wireless terminal in industrial control (industrial control), a tactile terminal device, a vehicle-mounted terminal device, a road side unit (road side unit, RSU), a wireless terminal in self driving (self driving), a communication terminal in an uncrewed aerial vehicle, a wireless terminal in telemedicine (remote medical), a wireless terminal in a smart grid (smart grid), a wireless terminal in transportation safety (transportation safety), a wireless terminal in transportation safety, a wireless terminal in a smart city (smart city), a wireless terminal in smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal in a 5G network, a terminal in a future evolved network, or the like.

The wearable device may also be referred to as a wearable smart device, and is a general term of wearable devices developed by intelligently designing daily wear by using a wearable technology, such as head-mounted XR glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, the wearable smart device includes full-featured and large-size devices, for example, smart watches or smart glasses, that can implement complete or partial functions without depending on smartphones, and devices, for example, various smart bands or smart jewelry used for monitoring physical signs, that dedicated to only one type of application function and need to be used together with other devices such as smartphones.

A radio access network (radio access network, RAN) device is a network including a plurality of 5G-RAN nodes, and implements functions of a radio physical layer, resource scheduling and radio resource management, quality of service management, data compression and encryption, radio access control, and mobility management. A 5G-RAN is connected to a user plane function (user plane function, UPF) network element through a user plane interface N3, to transmit data of the terminal device. The 5G-RAN establishes a control plane signaling connection to an access and mobility management function (access and mobility management function, AMF) network element through a control plane interface N2, to implement a function such as radio access bearer control. ARAN may be any device having a wireless transceiver function, including but not limited to a 5G base station (5G node base, gNB), an evolved NodeB (evolved node base, eNB), a wireless access point (wireless access point, Wi-Fi AP), a worldwide interoperability for microwave access base station (worldwide interoperability for microwave access base station, WiMAX BS), a transmission receiving point (transmission receiving point, TRP), a wireless relay node, a wireless backhaul node, and the like.

An access network device in this embodiment of this application may be a device configured to communicate with the terminal device. The access network device may be a base station (base transceiver station, BTS) in a global system for mobile communications (global system for mobile communications, GSM) system or code division multiple access (code division multiple access, CDMA), may be a base station (NodeB, NB) in a wideband code division multiple access (wideband code division multiple access, WCDMA) system, may be an evolved NodeB (evolved node base, eNB) in an LTE system, or may be a radio controller in a cloud radio access network (cloud radio access network, CRAN) scenario. Alternatively, the access network device may be a relay station, an access point, a vehicle-mounted device, a wearable device, an access network device in a future 5G network, an access network device in a future evolved PLMN network, or the like. This is not limited in this embodiment of this application.

In NR, functions of a base station are separated into two parts. This is referred to as central unit (central unit, CU)-distributed unit (distributed unit, DU) separation. From a perspective of a protocol stack, a CU includes an RRC layer and a PDCP layer of an LTE base station, and a DU includes a radio link control (radio link control, RLC) layer, a media access control (media access control, MAC) layer, and a physical (physical, PHY) layer of the LTE base station. In common 5G base station deployment, the CU and the DU may be physically connected through an optical fiber, and logically there is a specially defined F1 interface used for communication between the CU and the DU. From a perspective of a function, the CU is mainly responsible for radio resource control and configuration, inter-cell mobility management, bearer management, and the like. The DU is mainly responsible for generating and sending a physical signal and scheduling.

The base station may be a macro base station, a micro base station, a pico base station, a small cell, a relay station, a balloon station, or the like.

An access and mobility management function (access and mobility management function, AMF) belongs to a core network element, and is mainly responsible for signaling processing, for example, functions such as access control, mobility management, attachment and detachment, and gateway selection. When providing a service for a session of the terminal device, the AMF network element provides a control plane storage resource for the session, to store a session identifier and a session management (session management function, SMF) network element identifier associated with the session identifier. In addition, the AMF network element is further responsible for transferring a user policy between the terminal device and a policy control function (policy control function, PCF).

An SMF is mainly responsible for a control plane function for session management of the terminal device, including selection and redirection of a user plane function (user plane function, UPF) network element, internet protocol (internet protocol, IP) address allocation, bearer establishment, modification, release, quality of service (quality of service, QoS) control, session QoS management, obtaining of a policy and charging control (policy and charging control, PCC) policy (from a PCF), and the like.

A UPF network element is used as an anchor point of a protocol data unit (protocol data unit, PDU) session connection, is responsible for data packet filtering, data transmission/forwarding, rate control, charging information generation, and the like for the terminal device, and provides a connection to a data network (data network, DN).

The DN refers to a specific data service network that the terminal device accesses. The DN is responsible for providing a carrier service, internet access, or a third-party service. The DN includes a server, where the server may implement video source coding, rendering, and the like. A typical DN includes an internet network, an IP multimedia service (IP multimedia service, IMS) network, and the like. The DN may be identified by using a data network name (data network name, DNN) in a 5G network.

A unified data management (unified data management, UDM) network element is mainly configured to manage and control user data, for example, manage subscription information, including obtaining subscription information from a unified data repository (unified data repository, UDR) and providing the subscription information to another network element (for example, an AMF); generating an authentication credential of the third generation partnership project (the third generation partnership project, 3GPP) for the terminal device; registering and maintaining a network element currently serving the terminal device, for example, an AMF currently serving the terminal device (that is, a serving AMF); and notifying a corresponding network element when subscription data is modified.

A network repository function (network repository function, NRF) network element is mainly configured to support registration and discovery of a network function.

A network exposure function (network exposure function, NEF) network element exposes a service and a capability of a 3GPP network function to an application function (application function, AF), and also enables the AF to provide information to the 3GPP network function.

The AF interacts with a core network element to provide some services, for example, interacts with the PCF to perform service policy control, interacts with the NEF to obtain some network capability information or provide some application information for a network, and provides some data network access point information for the PCF to generate routing information of a corresponding data service.

An authentication server function (authentication server function, AUSF) performs security authentication on the terminal device when the terminal device accesses the network.

A network slice selection function (network slice selection function, NSSF) network element selects a slice instance set for the terminal device. A network slice instance that the terminal device is allowed to access is determined based on network slice selection assistance information (network slice selection assistance information, NSSAI), subscription information, and the like of the terminal device.

The PCF provides configuration policy information for the terminal device, provides policy information for a control plane network element (for example, an AMF or an SMF) of the network to manage and control the terminal device, and generates a terminal device access policy and a QoS flow control policy.

The terminal device in this embodiment of this application is connected to a RAN device in a wireless manner, and the RAN device is connected to a 5G core network device in a wireless or wired manner. The 5G core network device and the RAN device may be different physical devices that are independent of each other, or functions of the 5G core network device and logical functions of the RAN device may be integrated into a same physical device, or a part of functions of the 5G core network device and a part of functions of the RAN device may be integrated into one physical device. The terminal device may be located at a fixed location, or may be mobile.

The 5G core network device mainly includes the NEF network element, the PCF network element, the AF network element, the AMF network element, the SMF network element, the UPF network element, and the like.

It should be noted that the foregoing "network element" may also be referred to as an entity, a device, an apparatus, a module, or the like. This is not particularly limited in this application. In addition, in this application, for ease of understanding and description, the description of the "network element" is omitted in some descriptions. For example, the NEF network element is briefly referred to as an NEF. In this case, the "NEF" should be understood as an NEF network element or an NEF entity. Same or similar cases are not described below.

It should be noted that a name of each network element included in FIG. 1 is merely a name, and the name does not limit a function of the network element. In a 5G network and another future network, the foregoing network elements may alternatively have other names. This is not specifically limited in this embodiment of this application. For example, in a 6G network, a part or all of the foregoing network elements may still use terms in 5G, or may have other names. A general description is provided herein. Details are not described again below.

It should be noted that the network elements in FIG. 1 do not necessarily exist simultaneously, and required network elements may be determined based on a requirement. A connection relationship between the network elements in FIG. 1 is not uniquely determined, and may be adjusted based on a requirement.

It may be understood that the foregoing network elements or functions may be network elements in a hardware device, may be software functions running on dedicated hardware, or may be virtualized functions instantiated on a platform (for example, a cloud platform).

FIG. 2 is a diagram of a network service-based architecture for supporting location. As shown in FIG. 2, the architecture is extended based on the architecture shown in FIG. 1. For example, a plurality of functional entities such as a gateway mobile location center (gateway mobile location center, GMLC), a location retrieval function (location retrieval function, LRF), a location service client (location service client, LCS client), and a location management function (location management function, LMF) are added to support a location service function.

In FIG. 1 and FIG. 2, names and functions of interfaces between the network elements are as follows:
(1) N1: This is an interface between the AMF and the terminal device, and may be used for transferring a QoS control rule or the like to the terminal.
(2) N2: This is an interface between the AMF and the RAN, and may be used for transferring radio bearer control information or the like from a core network side to the RAN.
(3) N3: This is an interface between the RAN and the UPF, and is mainly used for transferring uplink and downlink user-plane data between the RAN and the UPF.
(4) N4: This is an interface between the SMF and the UPF, and may be used for transferring information between a control plane and a user plane, including delivering a forwarding rule, a QoS control rule, a traffic statistics rule, or the like from the control plane to the user plane, and reporting user-plane information.
(5) N5: This is an interface between the AF and the PCF, and may be used for delivering an application service request and reporting a network event.
(6) N6: This is an interface between the UPF and the DN, and is used for transferring uplink and downlink user data flows between the UPF and the DN.
(7) N7: This is an interface between the PCF and the SMF, and may be used for delivering a PDU session granularity and a service data flow granularity control policy.
(8) N8: This is an interface between the AMF and the UDM, and may be used by the AMF to obtain access and mobility management-related subscription data and authentication data from the UDM, used by the AMF to register current mobility management-related information of the terminal with the UDM, and so on.
(9) N9: This is a user-plane interface between UPFs, and is used for transferring uplink and downlink user data flows between the UPFs.
(10) N10: This is an interface between the SMF and the UDM, and may be used by the SMF to obtain session management-related subscription data from the UDM, used by the SMF to register current session-related information of the terminal with the UDM, and so on.
(11) N11: This is an interface between the SMF and the AMF, and may be used for transferring PDU session tunnel information between the RAN and the UPF, transferring a control message sent to the terminal, transferring radio resource control information sent to the RAN, and so on.
(12) N12: This is an interface between the AMF and the AUSF, and may be used by the AMF to initiate an authentication procedure to the AUSF, where a subscription concealed identifier (subscription concealed identifier, SUCI) may be carried as a subscription identifier.
(13)N13: This is an interface between the UDM and the AUSF, and may be used by the AUSF to obtain a user authentication vector from the UDM, to perform the authentication procedure.
(14) N15: This is an interface between the PCF and the AMF, and may be used for delivering a terminal policy and an access control-related policy.
(15) N17: This is a control plane interface between LMFs, and is used for transferring interaction signaling between the LMFs.
(16) NL1: This is an interface between the AMF and the LMF, and may be used for transferring mobility management-related information and a control policy.
(17) NL2: This is an interface between the AMF and the GMLC, and may be used for delivering a client policy and an access control-related policy.
(18) Le: This is an interface between the LCS client and the GMLC, and may be used for transmitting a client policy and an access control-related policy delivered by the core network, or uploading request signaling related to a client location service.
(19) PC5: This is an interface between terminal devices, and may be used for transmitting information on a data plane and a control plane, and a relative distance and/or a relative angle between the terminal devices may be further measured through the PC5 interface.

The foregoing network elements or functions may be network elements in a hardware device, may be software functions running on dedicated hardware, or may be virtualized functions instantiated on a platform (for example, a cloud platform). Optionally, the foregoing network elements or functions may be implemented by one device, may be jointly implemented by a plurality of devices, or may be implemented by one functional module in one device. This is not specifically limited in this embodiment of this application.

The access network device in this embodiment of this application may be a radio access network device.

In addition, the "network element" in this specification may also be referred to as a network function instance (network function instance), a network function (network function, NF), a device, an apparatus, a module, or the like. This is not particularly limited in this application.

For example, in some network architectures, network function entities such as the AMF, the LMF, and the UDM are all referred to as network function (network function, NF) network elements; or in some other network architectures, a set of network elements such as the AMF, the LMF, and the UDM may be referred to as a control plane function (control Plane function, CPF) network element.

It should be understood that FIG. 1 and FIG. 2 are merely examples of a network architecture, and a network architecture applicable to this embodiment of this application is not limited thereto. Any network architecture that can implement functions of the foregoing network elements is applicable to this embodiment of this application.

With rapid development of mobile communication, D2D communication allows direct communication between terminal devices (user equipment, UE). Within a short distance range, a sender UE and a receiver UE may directly communicate with each other after mutual discovery.

In some location scenarios, the relative distance between the UEs needs to be measured. The relative distance between the terminal devices may be determined through relative location, and the terminal device needs to have a sidelink (sidelink) positioning capability. The relative location between the terminal devices may be determining the relative distance and/or the relative angle between the terminal devices.

The relative distance between the terminal devices may be obtained through ranging, and the relative angle between the terminal devices may be obtained through angle measurement.

A method for measuring the relative distance between the terminal devices includes: single-side two-way ranging (single-side two-way ranging), double-side two-way ranging (double-side two-way ranging), and the like.

The single-side two-way ranging method is as follows: A terminal device A sends an initial ranging signal 1, and after receiving the initial ranging signal 1, a terminal device B sends, to the terminal device A, a feedback ranging signal 2 used for feedback. After receiving the feedback ranging signal 2, the terminal device A calculates a time difference 1 between sending of the initial ranging signal 1 and receiving of the feedback ranging signal 2. The terminal device B calculates a time difference 2 between receiving of the initial ranging signal 1 and sending of the feedback ranging signal 2.

Specifically, a distance between the terminal device A and the terminal device B=time of flight×the speed of light. The time of flight (time of flight, TOF)=(the time difference 1-the time difference 2)/2.

The double-side two-way ranging method is as follows: A terminal device A sends an initial ranging signal 1, and after receiving the initial ranging signal 1, a terminal device B sends, to the terminal device A, a feedback ranging signal 2 used for feedback. After receiving the feedback ranging signal 2, the terminal device A sends a response ranging signal 3 to the terminal device B. The terminal device A calculates a time difference 1 between sending of the initial ranging signal 1 and receiving of the feedback ranging signal 2, and a time difference 3 between sending of the response ranging signal 3 and the receiving of the feedback ranging signal 2. The terminal device B calculates a time difference 2 between receiving of the initial ranging signal 1 and sending of the feedback ranging signal 2, and a time difference 4 between the sending of the feedback ranging signal 2 and receiving of the response ranging signal 3.

Specifically, a distance between the terminal device A and the terminal device B=time of flight×the speed of light. The TOF=(the time difference 1×the time difference 4-the time difference 2×the time difference 3)/(the time difference 1+the time difference 2+the time difference 3+the time difference 4).

The double-side two-way ranging method is an extended ranging method of the single-side two-way ranging method, and measures time stamps of two round trips, to finally obtain the time of flight. Although the double-side two-way ranging method increases response time of ranging, the double-side two-way ranging method reduces an error of the ranging.

Currently, there is no related technical solution for determining a proper ranging mode. Consequently, a requirement of a location service cannot be better met.

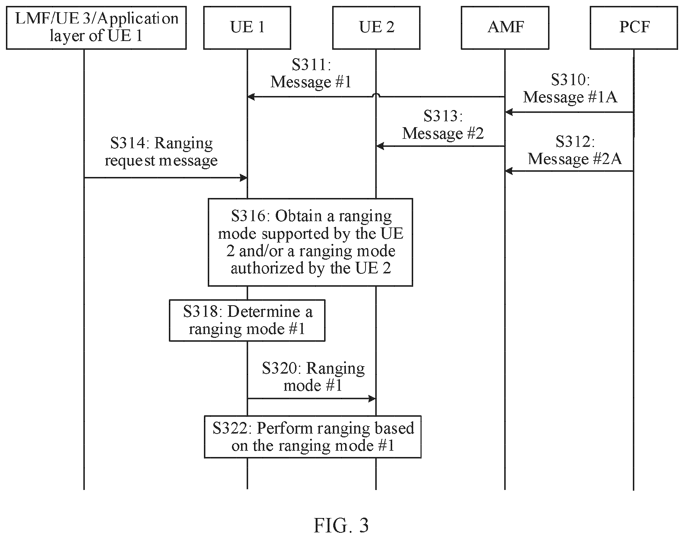

This application provides a method for determining a ranging mode, as shown in FIG. 3. A terminal device in this embodiment of this application may be represented by UE. However, it should be understood that the following UE may be replaced with any terminal device in all the foregoing terminal devices. This is not limited in this application.

This embodiment is applicable to a scenario of ranging between terminals.

Step S311: UE 1 receives a message #1 from an AMF, where the message #1 includes a ranging mode authorized by the UE 1.

Specifically, a PCF may send a message #1A to the AMF, where the message #1A includes the ranging mode authorized by the UE 1, as shown in step S310 in FIG. 3; and after receiving the message #1A, the AMF may send the message #1 to the UE 1, where the message #1 includes the ranging mode authorized by the UE 1.

Specifically, the ranging mode authorized by the UE 1 may include single-side two-way ranging, double-side two-way ranging, and the like.

By way of example and not limitation, the ranging mode authorized by the UE 1 may be determined based on subscription information of the UE 1.

Step S310 is optional.

Optionally, step S310 may alternatively be replaced with that the UE 1 receives, from the PCF, the ranging mode authorized by the UE 1.

Step S313: UE 2 receives a message #2 from the AMF, where the message #2 includes a ranging mode authorized by the UE 2.

Specifically, the PCF may send a message #2A to the AMF, where the message #2A includes the ranging mode authorized by the UE 2, as shown in step S312 in FIG. 3; and after receiving the message #2A, the AMF may send the message #2 to the UE 2, where the message #2 includes the ranging mode authorized by the UE 2.

Specifically, the ranging mode authorized by the UE 2 may include single-side two-way ranging, double-side two-way ranging, and the like.

By way of example and not limitation, the ranging mode authorized by the UE 2 may be determined based on subscription information of the UE 2.

Step S312 is optional.

Optionally, step S312 may alternatively be replaced with that the UE 2 receives, from the PCF, the ranging mode authorized by the UE 2.

Step S314: The UE 1 receives a ranging request message, where the ranging request message is used for requesting to measure a distance between the UE 1 and the UE 2.

Specifically, the ranging request message may include at least one of ranging accuracy #1, response time #1, and a ranging quality of service class #1, where the ranging accuracy #1 indicates an accuracy requirement of ranging between the UE 1 and the UE 2, and the response time #1 indicates a time requirement of the ranging between the UE 1 and the UE 2.

In addition, the ranging accuracy #1 may be considered as a threshold #1, and the threshold #1 indicates a minimum value of the accuracy requirement of the ranging between the UE 1 and the UE 2; and the response time #1 may be considered as a threshold #2, and the threshold #2 indicates a maximum value of latency time of the ranging between the UE 1 and the UE 2.

Specifically, the ranging request message may be sent by an application layer of the UE 1 to the UE 1, or may be sent by another UE 3 to the UE 1, or may be sent by an LMF to the UE 1. This is not limited in this application.

Optionally, step S314 may be replaced with that the UE 1 receives a ranging request from an application layer of the UE 1, where the ranging request is used for requesting to measure a distance between the UE 1 and the UE 2. That the UE 1 receives a ranging request from an application layer of the UE 1 may be understood as that a network layer of the UE 1 receives the ranging request from the application layer of the UE 1, and subsequent steps S316 to S322 are performed by the network layer of the UE 1.

Optionally, the ranging request message may alternatively be a relative location request message, and the relative location request message is used for requesting a relative location between terminal devices, that is, includes a relative distance and a relative angle.

Step S316: The UE 1 obtains a ranging capability of the UE 2 and/or the ranging mode authorized by the UE 2.

Specifically, the ranging capability of the UE 2 indicates a ranging mode supported by the UE 2, and the ranging capability of the UE 2 may include single-side two-way ranging, double-side two-way ranging, and the like.

It should be understood that the ranging mode authorized by the UE 2 may be partially the same as, or may be completely the same as, or may be completely different from the ranging mode supported by the UE 2. This is not limited in this application.

Similarly, the ranging mode authorized by the UE 1 may be partially the same as, or may be completely the same as, or may be completely different from a ranging mode supported by the UE 1. This is not limited in this application.

A sequence relationship between step S316 and steps S310, S312, and S314 is not limited.

Step S316 is optional.

Step S318: The UE 1 determines a ranging mode #1.

Specifically, the UE 1 may determine the ranging mode #1 based on a plurality of methods.

Mode 1: The UE 1 determines the ranging mode #1 based on at least one of the ranging accuracy #1, the response time #1, and the ranging quality of service class #1.

The ranging accuracy (ranging accuracy) may be represented as a specific distance range (for example, less than 1 meter), and is used for constraining a difference between a distance value obtained by performing a ranging operation and an actual distance. The response time (response time) may represent a low latency response or a high latency response, or may be specific latency time (for example, ranging is performed or a ranging result is obtained within the specific latency time), or may be a specific response time point (for example, a ranging result is obtained before the response time point or a time point), and the response time is used for constraining ranging time consumption. The ranging quality of service class (ranging QoS class) may be a best effort class (best effort class), an assured class (assured class), a high latency class (high latency class), or a low latency class (low latency class).

For example, if the ranging accuracy #1 is 1 meter (1m), and the specific latency time of the response time #1 is 5s, it may be determined that the ranging mode #1 is the single-side two-way ranging; or if the ranging accuracy #1 is 0.5 meters (0.5m), and the response time #1 is a point of 6s, it may be determined that the ranging mode #1 is the double-side two-way ranging.

Alternatively, if the ranging accuracy #1 is 1 meter (1m), it may be determined that the ranging mode #1 is the single-side two-way ranging; or if the ranging accuracy #1 is 0.5 meters (0.5m), it may be determined that the ranging mode #1 is the double-side two-way ranging.

Alternatively, if the specific latency time of the response time #1 is 5s, it may be determined that the ranging mode #1 is the single-side two-way ranging; or if the specific latency time of the response time #1 is 6s, it may be determined that the ranging mode #1 is the double-side two-way ranging.

Alternatively, if the ranging quality of service class #1 is the low latency class low latency class, it may be determined that the ranging mode #1 is the single-side two-way ranging; or if the ranging quality of service class #1 is the assured class, it may be determined that the ranging mode #1 is the double-side two-way ranging.

Mode 2: The UE 1 determines the ranging mode #1 based on a ranging capability of the UE 1 and the ranging capability of the UE 2.

Specifically, the ranging capability of the UE 1 indicates the ranging mode supported by the UE 1, and the ranging capability of the UE 2 indicates the ranging mode supported by the UE 2.

For example, if the ranging mode supported by the UE 1 includes the single-side two-way ranging and the double-side two-way ranging, and the ranging mode supported by the UE 2 includes the single-side two-way ranging, it may be determined that the ranging mode #1 is the single-side two-way ranging.

Mode 3: The UE 1 determines the ranging mode #1 based on the ranging mode authorized by the UE 1 and the ranging mode authorized by the UE 2.

For example, if the ranging mode authorized by the UE 1 includes the single-side two-way ranging and the double-side two-way ranging, and the ranging mode authorized by the UE 2 includes the single-side two-way ranging, it may be determined that the ranging mode #1 is the single-side two-way ranging.

Specifically, the UE 1 may determine the ranging mode #1 based on at least one of the foregoing mode 1, mode 2, and mode 3.

In addition, the ranging accuracy #1, the response time #1, and the ranging quality of service class #1 may include a plurality of different levels of ranging accuracy #1, response time #1, and ranging quality of service classes #1. When a ranging result obtained based on a ranging mode determined based on high ranging accuracy, fast response time, or a high quality of service class cannot meet a requirement of a ranging service, a ranging mode is determined based on higher accuracy, faster response time, or a higher quality of service class to perform ranging, and so on, until a ranging result of a determined ranging mode can meet at least one of a plurality of different levels of ranging accuracy, response time, and ranging quality of service classes included in the ranging accuracy #1, the response time #1, and the ranging quality of service class #1.

Step S320: The UE 1 sends the determined ranging mode #1 to the UE 2.

Step S320 is optional.

Optionally, the UE 1 sends a PC5 signaling message or a PC5 radio resource control message to the UE 2, where the PC5 signaling message or the PC5 radio resource control message includes the ranging mode #1.

Step S322: The UE 1 and the UE 2 perform ranging based on the ranging mode #1.

It should be understood that the UE 1 and the UE 2 perform ranging in different ranging modes, and perform different ranging operations.

For example, if the ranging mode #1 determined by the UE 1 is the single-side two-way ranging, the UE 1 sends an initial ranging signal 1, and after receiving the initial ranging signal 1, the UE 2 sends, to the UE 1, a feedback ranging signal 2 used for feedback. After receiving the feedback ranging signal 2, the UE 1 calculates a time difference 1 between sending of the initial ranging signal 1 and receiving of the feedback ranging signal 2. The UE 2 calculates a time difference 2 between receiving of the initial ranging signal 1 and sending of the feedback ranging signal 2, and feeds back information about the time difference 2 to the UE 1.

For example, if the ranging mode #1 determined by the UE 1 is the double-side two-way ranging, the UE 1 sends an initial ranging signal 1, and after receiving the initial ranging signal 1, the UE 2 sends, to the UE 1, a feedback ranging signal 2 used for feedback. After receiving the feedback ranging signal 2, the UE 1 sends a response ranging signal 3 to the UE 2. The UE 1 calculates a time difference 1 between sending of the initial ranging signal 1 and receiving of the feedback ranging signal 2, and a time difference 3 between sending of the response ranging signal 3 and the receiving of the feedback ranging signal 2. The UE 2 calculates a time difference 2 between receiving of the initial ranging signal 1 and sending of the feedback ranging signal 2, and a time difference 4 between the sending of the feedback ranging signal 2 and receiving of the response ranging signal 3, and feeds back information about the time difference 2 and the time difference 4 to the UE 1.

It should be understood that the ranging accuracy #1 may include a plurality of different levels of ranging accuracy and/or response time. If a measurement result of a ranging mode determined by the UE 1 based on a high accuracy level or fast response time cannot meet a used ranging accuracy or used response time, the UE 1 may continue to determine a ranging mode with a lower accuracy level or slower response time to perform ranging, until a measurement result of a determined ranging mode can meet the used ranging accuracy or the used response time.

According to the foregoing method, the UE 1 may efficiently determine, based on an actual requirement of a location service or based on authorization information or capability information of two ranging parties, a ranging mode that meets the requirement.

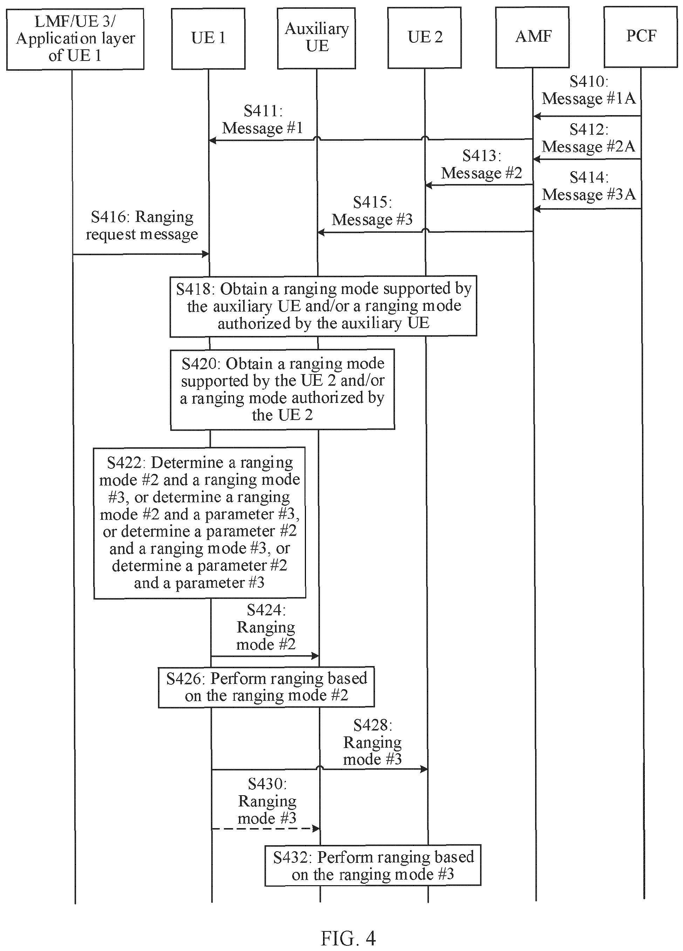

When direct ranging cannot be supported due to an obstacle or the like between the UE 1 and the UE 2, this application provides another method for determining a ranging mode, as shown in FIG. 4. This embodiment is applicable to a scenario in which an auxiliary UE assists in ranging of the UE 1 and the UE 2.

Step S411: The UE 1 receives a message #1 from an AMF, where the message #1 includes a ranging mode authorized by the UE 1.

Specifically, a PCF may send a message #1A to the AMF, where the message #1A includes the ranging mode authorized by the UE 1, as shown in step S410 in FIG. 4; and after receiving the message #1A, the AMF may send the message #1 to the UE 1, where the message #1 includes the ranging mode authorized by the UE 1.

Specifically, the ranging mode authorized by the UE 1 may include single-side two-way ranging, double-side two-way ranging, and the like.

By way of example and not limitation, the ranging mode authorized by the UE 1 may be determined based on subscription information of the UE 1.

Step S410 is optional.

Optionally, step S410 may alternatively be replaced with that the UE 1 receives, from the PCF, the ranging mode authorized by the UE 1.

Step S413: The UE 2 receives a message #2 from the AMF, where the message #2 includes a ranging mode authorized by the UE 2.

Specifically, the PCF may send a message #2A to the AMF, where the message #2A includes the ranging mode authorized by the UE 2, as shown in step S412 in FIG. 4; and after receiving the message #2A, the AMF may send the message #2 to the UE 2, where the message #2 includes the ranging mode authorized by the UE 2.

Specifically, the ranging mode authorized by the UE 2 may include single-side two-way ranging, double-side two-way ranging, and the like.

By way of example and not limitation, the ranging mode authorized by the UE 2 may be determined based on subscription information of the UE 2.

Step S412 is optional.

Optionally, step S412 may alternatively be replaced with that the UE 2 receives, from the PCF, the ranging mode authorized by the UE 2.

Step S415: The auxiliary UE receives a message #3 from the AMF, where the message #3 includes a ranging mode authorized by the auxiliary UE.

Specifically, the PCF may send a message #3A to the AMF, where the message #3A includes the ranging mode authorized by the auxiliary UE, as shown in step S414 in FIG. 4; and after receiving the message #3A, the AMF may send the message #3 to the auxiliary UE, where the message #3 includes the ranging mode authorized by the auxiliary UE.

Specifically, the ranging mode authorized by the auxiliary UE may include single-side two-way ranging, double-side two-way ranging, and the like.

By way of example and not limitation, the ranging mode authorized by the auxiliary UE may be determined based on subscription information of the auxiliary UE.

Step S414 is optional.

Optionally, step S414 may alternatively be replaced with that the auxiliary UE receives, from the PCF, the ranging mode authorized by the auxiliary UE.

Step S410, step S412, and step S414 are optional.

Step S416: The UE 1 receives a ranging request message, where the ranging request message is used for requesting to measure a distance between the UE 1 and the UE 2.

Specifically, the ranging request message may include at least one of ranging accuracy #1, response time #1, and a ranging quality of service class #1, where the ranging accuracy #1 indicates an accuracy requirement of ranging between the UE 1 and the UE 2, and the response time #1 indicates a time requirement of the ranging between the UE 1 and the UE 2.

Specifically, the ranging quality of service class #1 may be a location quality of service level, and the location quality of service level includes a strict level, a non-strict level, a best effort level, an assured level, and the like.

In addition, the ranging accuracy #1 may be considered as a threshold #1, and the threshold #1 indicates a minimum value of the accuracy requirement of the ranging between the UE 1 and the UE 2; and the response time #1 may be considered as a threshold #2, and the threshold #2 indicates a maximum value of latency time of the ranging between the UE 1 and the UE 2.

Specifically, the ranging request message may be sent by an application layer of the UE 1 to the UE 1, or may be sent by another UE 3 to the UE 1, or may be sent by an LMF to the UE 1. This is not limited in this application.

Optionally, step S416 may be replaced with that the UE 1 receives a ranging request from an application layer of the UE 1, where the ranging request is used for requesting to measure a distance between the UE 1 and the UE 2. That the UE 1 receives a ranging request from an application layer of the UE 1 may be understood as that a network layer of the UE 1 receives the ranging request from the application layer of the UE 1, and subsequent steps S418 to S430 are performed by the network layer of the UE 1.

Optionally, the ranging request message may alternatively be a relative location request message, and the relative location request message is used for requesting a relative location between terminal devices, that is, includes a relative distance and a relative angle.

When the UE 1 receives the ranging request message, but direct ranging (direct ranging) between the UE 1 and the UE 2 is not supported, the UE 1 executes a procedure of discovering the auxiliary UE, where the auxiliary UE is configured to assist in the ranging between the UE 1 and the UE 2.

Step S418: The UE 1 obtains a ranging capability of the auxiliary UE and/or a ranging mode authorized by the auxiliary UE.

Specifically, the ranging capability of the auxiliary UE indicates a ranging mode supported by the auxiliary UE, and the ranging capability of the auxiliary UE may include single-side two-way ranging, double-side two-way ranging, and the like.

It should be understood that the ranging mode authorized by the auxiliary UE may be partially the same as, or may be completely the same as, or may be completely different from the ranging mode supported by the auxiliary UE. This is not limited in this application.

Similarly, the ranging mode authorized by the UE 1 may be partially the same as, or may be completely the same as, or may be completely different from a ranging mode supported by the UE 1. This is not limited in this application.

Step S418 is optional.

Step S420: The UE 1 obtains a ranging capability of the UE 2 and/or the ranging mode authorized by the UE 2.

Specifically, the ranging capability of the UE 2 indicates a ranging mode supported by the UE 2, and the ranging capability of the UE 2 may include single-side two-way ranging, double-side two-way ranging, and the like.

It should be understood that the ranging mode authorized by the UE 2 may be partially the same as, or may be completely the same as, or may be completely different from the ranging mode supported by the UE 2. This is not limited in this application.

A sequence relationship between step S420 and steps S410, S412, S414, S416, and S418 is not limited.

Step S420 is optional.

Step S422: The UE 1 determines a ranging mode #2 and a ranging mode #3 based on at least one of the ranging accuracy #1, the response time #1, and the ranging quality of service class #1. The ranging mode #2 represents a ranging mode between the UE 1 and the auxiliary UE, and the ranging mode #3 represents a ranging mode between the UE 2 and the auxiliary UE.

The ranging accuracy (ranging accuracy) may be represented as a specific distance range (for example, less than 1 meter), and is used for constraining a difference between a distance value obtained by performing a ranging operation and an actual distance. The response time (response time) may represent a low latency response or a high latency response, or may be specific latency time (for example, ranging is performed or a ranging result is obtained within the specific latency time), or may be a specific response time point (for example, a ranging result is obtained before the response time point or a time point), and the response time is used for constraining ranging time consumption. The ranging quality of service class (ranging QoS class) may be a best effort class (best effort class), an assured class (assured class), a high latency class (high latency class), or a low latency class (low latency class).

For example, the UE 1 may determine the ranging mode #2 and the ranging mode #3 based on a plurality of methods.

Mode 1: The UE 1 determines the ranging mode #2 and the ranging mode #3 based on at least one of the ranging accuracy #1, the response time #1, and the ranging quality of service class #1.

For example, the UE 1 may determine the ranging mode #2 and the ranging mode #3 based on a correspondence or a mapping table between the ranging mode that needs to be used and at least one of the ranging accuracy #1, the response time #1, and the ranging quality of service class #1. The correspondence may be preconfigured by the UE 1, as shown in Table 1.

**Table 1**

| Ranging mode #2 | Ranging mode #3 | Ranging accuracy #1 (m) | Response time #1 (s) | Ranging quality of service class #1 |
|---|---|---|---|---|
| Single-side two-way ranging | Single-side two-way ranging | 2 | 5 | Low latency class |
| Single-side two-way ranging | Single-side two-way ranging | 1 | 6 | Best effort class |
| Double-side two-way ranging | Double-side two-way ranging | 0.5 | 7 | High latency class |
| Double-side two-way ranging | Double-side two-way ranging | 0.2 | 8 | Assured class |

The correspondence or the mapping table may be locally preconfigured or obtained from a core network element (for example, a PCF).

Mode 2: The UE 1 determines the ranging mode #2 based on a ranging capability of the UE 1 and the ranging capability of the auxiliary UE, and the UE 1 determines the ranging mode #3 based on the ranging capability of the UE 2 and the ranging capability of the auxiliary UE.

Specifically, the ranging capability of the UE 1 represents the ranging mode supported by the UE 1, the ranging capability of the UE 2 represents the ranging mode supported by the UE 2, and the ranging capability of the auxiliary UE represents the ranging mode supported by the auxiliary UE.

For example, if the ranging mode supported by the UE 1 includes the single-side two-way ranging and the double-side two-way ranging, and the ranging mode supported by the auxiliary UE includes the single-side two-way ranging, it may be determined that the ranging mode #2 is the single-side two-way ranging.

Similarly, if the ranging mode supported by the UE 2 includes the single-side two-way ranging and the double-side two-way ranging, and the ranging mode supported by the auxiliary UE includes the single-side two-way ranging, it may be determined that the ranging mode #3 is the single-side two-way ranging.

Mode 3: The UE 1 determines the ranging mode #2 based on the ranging mode authorized by the UE 1 and the ranging mode authorized by the auxiliary UE, and the UE 1 determines the ranging mode #3 based on the ranging mode authorized by the UE 2 and the ranging mode authorized by the auxiliary UE.

For example, if the ranging mode authorized by the UE 1 includes the single-side two-way ranging and the double-side two-way ranging, and the ranging mode authorized by the auxiliary UE includes the single-side two-way ranging, it may be determined that the ranging mode #2 is the single-side two-way ranging.

Similarly, if the ranging mode authorized by the UE 2 includes the single-side two-way ranging and the double-side two-way ranging, and the ranging mode authorized by the auxiliary UE includes the single-side two-way ranging, it may be determined that the ranging mode #3 is the single-side two-way ranging.

Specifically, the UE 1 may determine the ranging mode #2 and the ranging mode #3 based on at least one of the foregoing mode 1, mode 2, and mode 3.

Step S424: The UE 1 sends the determined ranging mode #2 to the auxiliary UE.

Step S426: The UE 1 and the auxiliary UE perform ranging based on the ranging mode #2.

For example, if the ranging mode #2 determined by the UE 1 is the single-side two-way ranging, the UE 1 sends an initial ranging signal 1, and after receiving the initial ranging signal 1, the auxiliary UE sends, to the UE 1, a feedback ranging signal 2 used for feedback. After receiving the feedback ranging signal 2, the UE 1 calculates a time difference 1 between sending of the initial ranging signal 1 and receiving of the feedback ranging signal 2. The auxiliary UE calculates a time difference 2 between receiving of the initial ranging signal 1 and sending of the feedback ranging signal 2, and feeds back information about the time difference 2 to the UE 1.

For example, if the ranging mode #2 determined by the UE 1 is the double-side two-way ranging, the UE 1 sends an initial ranging signal 1, and after receiving the initial ranging signal 1, the auxiliary UE sends, to the UE 1, a feedback ranging signal 2 used for feedback. After receiving the feedback ranging signal 2, the UE 1 sends a response ranging signal 3 to the auxiliary UE. The UE 1 calculates a time difference 1 between sending of the initial ranging signal 1 and receiving of the feedback ranging signal 2, and a time difference 3 between sending of the response ranging signal 3 and the receiving of the feedback ranging signal 2. The auxiliary UE calculates a time difference 2 between receiving of the initial ranging signal 1 and sending of the feedback ranging signal 2, and a time difference 4 between the sending of the feedback ranging signal 2 and receiving of the response ranging signal 3, and feeds back information about the time difference 2 and the time difference 4 to the UE 1.

It should be understood that steps S424 and S426 are optional. When the UE 1 knows a result of ranging between the UE 1 and the auxiliary UE (for example, the UE 1 and the auxiliary UE perform a ranging operation before step S416), steps S424 and S426 may not be performed. Correspondingly, in step S422, the UE 1 does not need to determine the ranging mode #2 or a parameter #2 (that is, step S422 may be replaced with determining the ranging mode #3 or a parameter #3).

Step S428: The UE 1 sends the determined ranging mode #3 to the UE 2.

Specifically, the UE 1 may further send identification information of the auxiliary UE to the UE 2.

Optionally, in step S430, the UE 1 sends the determined ranging mode #3 to the auxiliary UE.

Specifically, the UE 1 may further send identification information of the UE 2 to the auxiliary UE.

Step S432: The UE 2 and the auxiliary UE perform ranging based on the ranging mode #3.

For example, if the ranging mode #3 determined by the UE 1 is the single-side two-way ranging, the UE 2 sends an initial ranging signal 1, and after receiving the initial ranging signal 1, the auxiliary UE sends, to the UE 2, a feedback ranging signal 2 used for feedback. After receiving the feedback ranging signal 2, the UE 2 calculates a time difference 1 between sending of the initial ranging signal 1 and receiving of the feedback ranging signal 2. The auxiliary UE calculates a time difference 2 between receiving of the initial ranging signal 1 and sending of the feedback ranging signal 2, and feeds back information about the time difference 2 to the UE 2.

For example, if the ranging mode #3 determined by the UE 1 is the double-side two-way ranging, the UE 2 sends an initial ranging signal 1, and after receiving the initial ranging signal 1, the auxiliary UE sends, to the UE 2, a feedback ranging signal 2 used for feedback. After receiving the feedback ranging signal 2, the UE 2 sends a response ranging signal 3 to the auxiliary UE. The UE 2 calculates a time difference 1 between sending of the initial ranging signal 1 and receiving of the feedback ranging signal 2, and a time difference 3 between sending of the response ranging signal 3 and the receiving of the feedback ranging signal 2. The auxiliary UE calculates a time difference 2 between receiving of the initial ranging signal 1 and sending of the feedback ranging signal 2, and a time difference 4 between the sending of the feedback ranging signal 2 and receiving of the response ranging signal 3, and feeds back information about the time difference 2 and the time difference 4 to the UE 2.

Optionally, after steps S426 and S432, the UE 1 may calculate a relative location between the UE 1 and the UE 2 based on a relative location between the UE 1 and the auxiliary UE (that is, the ranging result obtained in step S426) and a relative location between the UE 2 and the auxiliary UE (that is, a ranging result obtained in step S432), and feed back the relative location to a sender (for example, the LMF, the UE 3, or the application layer of the UE 1) of the ranging request message. In addition, the UE 1 may further calculate actual ranging accuracy of the ranging between the UE 1 and the UE 2 based on actual ranging accuracy of the ranging mode #2 and actual ranging accuracy of the ranging mode #3. The actual ranging accuracy may be used for adjusting a ranging mode. The actual ranging accuracy of the ranging mode #2 may be obtained through calculation based on the ranging result obtained in step S426, and the actual ranging accuracy of the ranging mode #3 may be obtained through calculation based on the ranging result obtained in step S432. The UE 1 may further feed back the actual ranging accuracy of the ranging between the UE 1 and the UE 2 to an application layer of the LMF, the UE 3, or the UE 1.

In addition, the UE 1 may obtain the actual ranging accuracy of the ranging mode #3 from the UE 2 or the auxiliary UE, or the UE 1 may obtain the actual ranging accuracy of the ranging mode #2 from the auxiliary UE.

Optionally, if the actual ranging accuracy of the ranging between the UE 1 and the UE 2 cannot meet the ranging accuracy #1, the UE 1 may further perform step S422, that is, the UE 1 determines the ranging mode #2 and the ranging mode #3. It should be understood that the UE 1 selects a new ranging mode, and tries to meet the ranging accuracy #1.

Optionally, the foregoing step S422 may be replaced with that the UE 1 determines the parameter #2 and the ranging mode #3 based on at least one of the ranging accuracy #1, the response time #1, and the ranging quality of service class #1; or the UE 1 determines the ranging mode #2 and a parameter #3 based on at least one of the ranging accuracy #1, the response time #1, and the ranging quality of service class #1; or the UE 1 determines the parameter #2 and a parameter #3 based on at least one of the ranging accuracy #1, the response time #1, and the ranging quality of service class #1. The parameter #2 may be used for determining the ranging mode #2, and the parameter #3 may be used for determining the ranging mode #3.

Specifically, the parameter #2 may include at least one of ranging accuracy #2, response time #2, and a ranging quality of service class #2; and the parameter #3 may include at least one of ranging accuracy #3, response time #3, and a ranging quality of service class #3. Specifically, the ranging accuracy #2 and the ranging accuracy #3 may be higher than the ranging accuracy #1, latency time of the response time #2 and the response time #3 may be lower than that of the response time #1, and quality of service levels of the ranging quality of service class #2 and the ranging quality of service class #3 may be higher than a quality of service level of the ranging quality of service class #1.

It should be understood that, when the UE 1 knows the result of the ranging between the UE 1 and the auxiliary UE, the UE 1 does not need to determine the ranging mode #2 or the parameter #2 in step S422.

When the UE 1 determines the parameter #2 and the ranging mode #3 based on at least one of the ranging accuracy #1, the response time #1, and the ranging quality of service class #1, step S424 may be replaced with that the UE 1 sends the determined parameter #2 to the auxiliary UE, and the auxiliary UE determines the ranging mode #2 based on the parameter #2.

When the UE 1 determines the ranging mode #2 and the parameter #3 based on at least one of the ranging accuracy #1, the response time #1, and the ranging quality of service class #1, step S428 may be replaced with that the UE 1 sends the determined parameter #3 to the UE 2, and the UE 2 determines the ranging mode #3 based on the parameter #3.

When the UE 1 determines the parameter #2 and the parameter #3 based on at least one of the ranging accuracy #1, the response time #1, and the ranging quality of service class #1, step S424 may be replaced with that the UE 1 sends the determined parameter #2 to the auxiliary UE, and the auxiliary UE determines the ranging mode #2 based on the parameter #2, and step S428 may be replaced with that the UE 1 sends the determined parameter #3 to the UE 2, and the UE 2 determines the ranging mode #3 based on the parameter #3.

In a scenario in which two terminal devices cannot directly communicate with each other, the foregoing method for introducing the auxiliary UE is used, so that the UE 1 can efficiently determine, based on an actual requirement of a ranging service or based on the ranging mode authorized by the auxiliary UE and the ranging mode authorized by the UE 2 or based on information about the ranging capability of the auxiliary UE and information about the ranging capability of the UE 2, a ranging mode that meets the requirement.

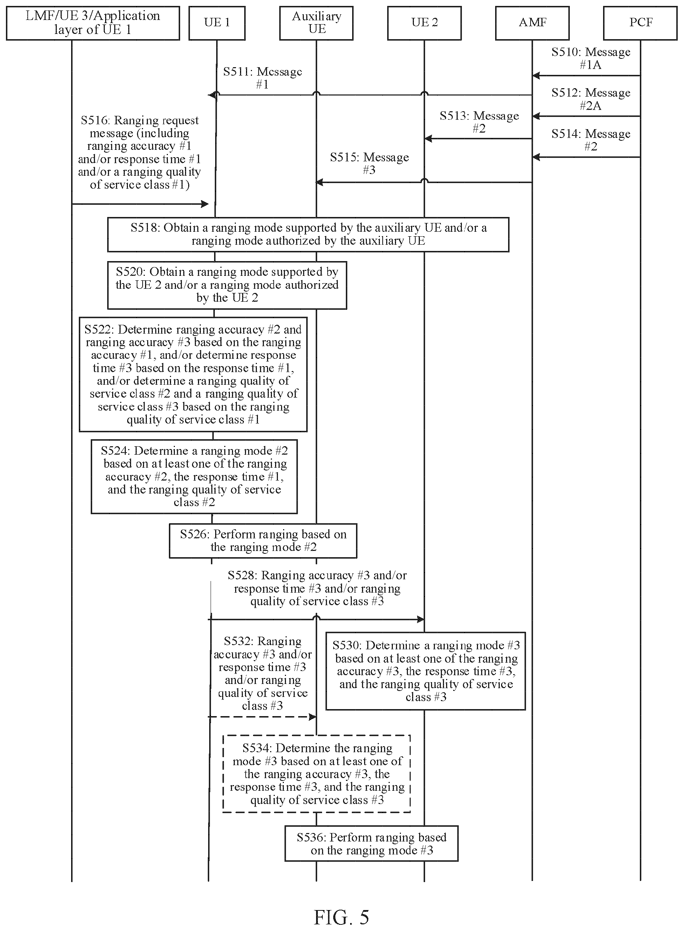

In addition to the method shown in FIG. 4, this application may further provide another method for determining a ranging mode when direct ranging cannot be supported due to an obstacle or the like between UE 1 and UE 2, as shown in FIG. 5. This embodiment is also applicable to a scenario in which an auxiliary UE assists in ranging of the UE 1 and the UE 2.

For step S510 to step S520, refer to step S410 to step S420. Details are not described herein again.

Step S510 to step S514, and step S518 to step S520 are optional.

Step S522: The UE 1 determines ranging accuracy #2 and ranging accuracy #3 based on ranging accuracy #1.

Optionally, the ranging accuracy #2 and the ranging accuracy #3 are higher than the ranging accuracy #1.

Specifically, the ranging accuracy #2 may be considered as a threshold #3, and the threshold #3 represents a minimum value of an accuracy requirement of ranging between the UE 1 and the auxiliary UE; and the ranging accuracy #3 may be considered as a threshold #4, and the threshold #4 represents a minimum value of an accuracy requirement of ranging between the UE 2 and the auxiliary UE.

Alternatively, the UE 1 may determine response time #3 based on response time #1, where latency time of the response time #3 is less than latency time of the response time #1. The response time #3 may be considered as a threshold #5, and the threshold #5 may represent a maximum value of latency time of the ranging between the UE 2 and the auxiliary UE.

Alternatively, the UE 1 may determine response time #2 and response time #3 based on response time #1, where latency time of the response time #2 and latency time of the response time #3 are less than latency time of the response time #1. The response time #2 may be considered as a threshold #6, and the threshold #6 may represent a maximum value of latency time of the ranging between the UE 1 and the auxiliary UE.

Alternatively, the UE 1 may determine a ranging quality of service class #2 and a ranging quality of service class #3 based on a ranging quality of service class #1, where quality of service levels of the ranging quality of service class #2 and the ranging quality of service class #3 are higher than a quality of service level of the ranging quality of service class #1.

Step S524: The UE 1 determines a ranging mode #2 based on at least one of the ranging accuracy #2, the response time #1, and the ranging quality of service class #2.

Optionally, the UE 1 may send at least one of the ranging accuracy #2, the response time #1, and the ranging quality of service class #2 to the auxiliary UE, and the auxiliary UE determines the ranging mode #2.

Optionally, the UE 2 may send at least one of the ranging accuracy #2, the response time #1, and the ranging quality of service class #2 to the auxiliary UE, and the auxiliary UE determines the ranging mode #2.

For example, the UE 1 or the auxiliary UE determines the ranging mode #2 based on a correspondence or a mapping table between the ranging mode that needs to be used and at least one of the ranging accuracy #2, the response time #1, and the ranging quality of service class #2. The correspondence may be preconfigured by the UE 1 or the auxiliary UE, as shown in Table 2.

**Table 2**

| Ranging mode #2 | Ranging accuracy #2 (m) | Response time #1 (s) | Ranging quality of service class #2 |
|---|---|---|---|
| Single-side two-way ranging | 2 | 5 | Low latency class |
| Single-side two-way ranging | 1 | 6 | Best effort class |
| Double-side two-way ranging | 0.5 | 7 | High latency class |
| Double-side two-way ranging | 0.2 | 8 | Assured class |

The correspondence or the mapping table may be locally preconfigured or obtained from a core network element (for example, a PCF).

Step S526: The UE 1 and the auxiliary UE perform ranging based on the ranging mode #2.

For example, if the determined ranging mode #2 is the single-side two-way ranging, the UE 1 sends an initial ranging signal 1, and after receiving the initial ranging signal 1, the auxiliary UE sends, to the UE 1, a feedback ranging signal 2 used for feedback. After receiving the feedback ranging signal 2, the UE 1 calculates a time difference 1 between sending of the initial ranging signal 1 and receiving of the feedback ranging signal 2. The auxiliary UE calculates a time difference 2 between receiving of the initial ranging signal 1 and sending of the feedback ranging signal 2, and feeds back information about the time difference 2 to the UE 1.

For example, if the determined ranging mode #2 is the double-side two-way ranging, the UE 1 sends an initial ranging signal 1, and after receiving the initial ranging signal 1, the auxiliary UE sends, to the UE 1, a feedback ranging signal 2 used for feedback. After receiving the feedback ranging signal 2, the UE 1 sends a response ranging signal 3 to the auxiliary UE. The UE 1 calculates a time difference 1 between sending of the initial ranging signal 1 and receiving of the feedback ranging signal 2, and a time difference 3 between sending of the response ranging signal 3 and the receiving of the feedback ranging signal 2. The auxiliary UE calculates a time difference 2 between receiving of the initial ranging signal 1 and sending of the feedback ranging signal 2, and a time difference 4 between the sending of the feedback ranging signal 2 and receiving of the response ranging signal 3, and feeds back information about the time difference 2 and the time difference 4 to the UE 1.

It should be understood that steps S524 and S526 are optional. When the UE 1 knows a result of the ranging between the UE 1 and the auxiliary UE (for example, the UE 1 and the auxiliary UE perform a ranging operation before step S516), steps S524 and S526 may not be performed. Correspondingly, in step S522, the UE 1 does not need to determine the ranging accuracy #2 or the ranging quality of service class #2 (that is, step S522 may be replaced with determining the ranging accuracy #3, the response time #3, or the ranging quality of service class #3).

Step S528: The UE 1 sends at least one of the determined ranging accuracy #3, response time #3, and ranging quality of service class #3 to the UE 2.

Specifically, the UE 1 may further send identification information of the auxiliary UE to the UE 2.

Step S530: The UE 2 determines a ranging mode #3 based on at least one of the ranging accuracy #3, the response time #3, and the ranging quality of service class #3.

For example, the UE 2 may determine the ranging mode #3 based on a correspondence or a mapping table between the ranging mode that needs to be used and at least one of the ranging accuracy #3, the response time #3, and the ranging quality of service class #3. The correspondence or the mapping table may be locally preconfigured or obtained from a core network element (for example, a PCF).

Optionally, in step S532, the UE 1 sends at least one of the determined ranging accuracy #3, response time #3, and ranging quality of service class #3 to the auxiliary UE.

Specifically, the UE 1 may further send identification information of the UE 2 to the auxiliary UE.

Optionally, in step S534, the auxiliary UE determines the ranging mode #3 based on at least one of the ranging accuracy #3, the response time #3, and the ranging quality of service class #3.

For example, the auxiliary UE or the UE 2 may determine the ranging mode #3 based on a correspondence or a mapping table between the ranging mode that needs to be used and at least one of the ranging accuracy #3, the response time #3, and the ranging quality of service class #3. The correspondence may be preconfigured by the UE 2 or the auxiliary UE, as shown in Table 3.

**Table 3**

| Ranging mode #3 | Ranging accuracy #3 (m) | Response time #3 (s) | Ranging quality of service class #3 |
|---|---|---|---|
| Single-side two-way ranging | 2 | 5 | Low latency class |
| Single-side two-way ranging | 1 | 6 | Best effort class |
| Double-side two-way ranging | 0.5 | 7 | High latency class |
| Double-side two-way ranging | 0.2 | 8 | Assured class |

The correspondence or the mapping table may be locally preconfigured or obtained from a core network element (for example, a PCF).

Optionally, the UE 1 may also determine the ranging mode #3 based on at least one of the ranging accuracy #3, the response time #3, and the ranging quality of service class #3, and send the ranging mode #3 to the UE 2 and/or the auxiliary UE.

Step S536: The UE 2 and the auxiliary UE perform ranging based on the ranging mode #3.

For example, if the determined ranging mode #3 is the single-side two-way ranging, the UE 2 sends an initial ranging signal 1, and after receiving the initial ranging signal 1, the auxiliary UE sends, to the UE 2, a feedback ranging signal 2 used for feedback. After receiving the feedback ranging signal 2, the UE 2 calculates a time difference 1 between sending of the initial ranging signal 1 and receiving of the feedback ranging signal 2. The auxiliary UE calculates a time difference 2 between receiving of the initial ranging signal 1 and sending of the feedback ranging signal 2, and feeds back information about the time difference 2 to the UE 2.

For example, if the determined ranging mode #3 is the double-side two-way ranging, the UE 2 sends an initial ranging signal 1, and after receiving the initial ranging signal 1, the auxiliary UE sends, to the UE 2, a feedback ranging signal 2 for feedback. After receiving the feedback ranging signal 2, the UE 2 sends a response ranging signal 3 to the auxiliary UE. The UE 2 calculates a time difference 1 between sending of the initial ranging signal 1 and receiving of the feedback ranging signal 2, and a time difference 3 between sending of the response ranging signal 3 and the receiving of the feedback ranging signal 2. The auxiliary UE calculates a time difference 2 between receiving of the initial ranging signal 1 and sending of the feedback ranging signal 2, and a time difference 4 between the sending of the feedback ranging signal 2 and receiving of the response ranging signal 3, and feeds back information about the time difference 2 and the time difference 4 to the UE 2.

Optionally, after steps S526 and S536, the UE 1 may calculate a relative location between the UE 1 and the UE 2 based on a relative location between the UE 1 and the auxiliary UE (that is, the ranging result obtained in step S526) and a relative location between the UE 2 and the auxiliary UE (that is, a ranging result obtained in step S536), and feed back the relative location to a sender (for example, an LMF, UE 3, or an application layer of the UE 1) of a ranging request message.

In addition, the UE 1 may further calculate actual ranging accuracy of ranging between the UE 1 and the UE 2 based on actual ranging accuracy of the ranging mode #2 and actual ranging accuracy of the ranging mode #3. The actual ranging accuracy may be used for adjusting a ranging mode. The actual ranging accuracy of the ranging mode #2 may be obtained through calculation based on the ranging result obtained in step S526, and the actual ranging accuracy of the ranging mode #3 may be obtained through calculation based on the ranging result obtained in step S536.

In addition, the UE 1 may obtain the actual ranging accuracy of the ranging mode #3 from the UE 2 or the auxiliary UE, or the UE 1 may obtain the actual ranging accuracy of the ranging mode #2 from the auxiliary UE.

Optionally, if the actual ranging accuracy of the ranging between the UE 1 and the UE 2 cannot meet the ranging accuracy #1, the UE 1 may further perform step S522, that is, the UE 1 determines the ranging accuracy #2 and the ranging accuracy #3. It should be understood that the UE 1 reconfigures the ranging accuracy #2 and the ranging accuracy #3, to meet the ranging accuracy #1 as much as possible.

In a scenario in which two terminal devices cannot directly communicate with each other, the foregoing method for introducing the auxiliary UE is used, so that the UE 1 can properly set ranging accuracy and response time for each of the two terminal devices and an auxiliary terminal device. Therefore, a finally determined ranging mode meets a requirement of a location service as much as possible.

The foregoing scenario of ranging between the two terminal devices is further applicable to a scenario of locating one target terminal device. For example, when a location service client (location service client, LCS client) or a target terminal device determines, based on measurement data obtained from the target terminal device, that a quality of service of the LCS is not met or a quantity of cells measured during location is insufficient, the location service client or the target terminal device determines to use a hybrid location mode to locate the target terminal device.

Specifically, the foregoing hybrid location mode includes location of an auxiliary terminal device discovered by the target terminal device and ranging of the target terminal device and the auxiliary terminal device, to calculate a location of the target terminal device.

Specifically, the auxiliary terminal device may also be referred to as a located terminal device (located UE) or a reference terminal device (reference UE).

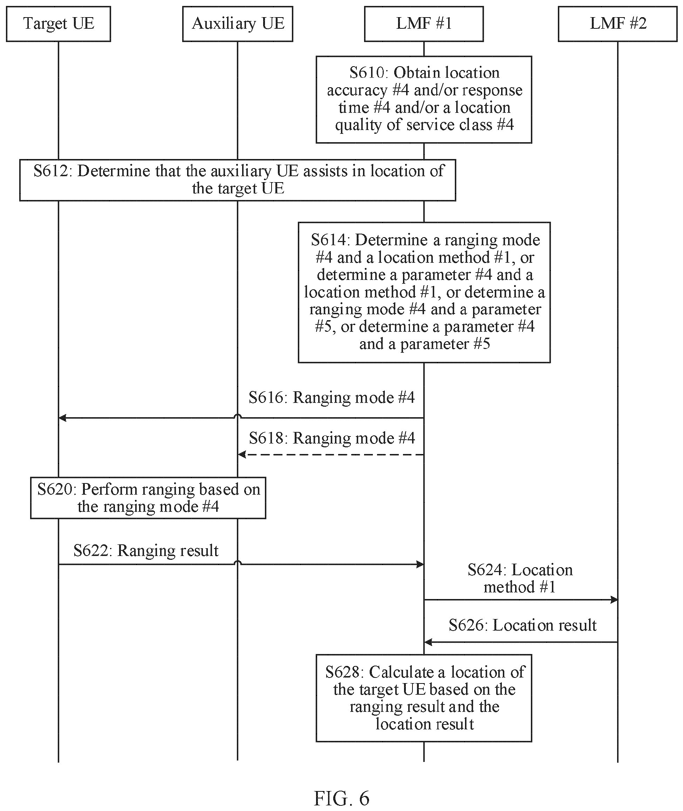

This application provides a method for locating the foregoing target terminal device (referred to as a target UE below). As shown in FIG. 6, the method includes a method of a ranging mode between the target UE and the foregoing auxiliary terminal device (referred to as an auxiliary UE below). This embodiment is applicable to a network assisted sidelink positioning (network assisted sidelink positioning) scenario.

Step S610: An LMF #1 obtains at least one of location accuracy #4, response time #4, and a location quality of service class #4 (LCS quality of service class, LCS QoS Class). The LMF #1 is an LMF serving the target UE.

Specifically, the location quality of service class may be a location quality of service level, and the location quality of service level includes a strict level, a non-strict level, a best effort (best effort class) level, an assured level (assured class), and the like.

Specifically, the location accuracy #4 may be considered as a threshold #7, and the threshold #7 represents a minimum value of a location accuracy requirement of the target UE; and the response time #4 may be considered as a threshold #8, and the threshold #8 represents a maximum value of latency time of location time of the target UE.

Optionally, the LMF #1 receives a determine location request (Determine Location Request) message from an AMF #1, where the message includes the location accuracy #4 and/or the response time #4, and the AMF #1 is an access and mobility management network element of the target UE.

Step S612: The LMF #1 determines that the auxiliary UE assists in location of the target UE.

Optionally, when the LMF #1 may determine, based on measurement data obtained from the target UE, that the quality of service of the LCS is not met or the quantity of cells measured during the location is insufficient, the LMF #1 determines that the auxiliary UE assists in the location of the target UE, or uses the hybrid location mode to locate the target UE.

Optionally, the LMF #1 requests the target UE to obtain/discover the auxiliary UE, or the LMF #1 notifies the target UE that the hybrid location mode is used. The target UE executes a procedure of discovering the auxiliary UE, and determines to select the auxiliary UE. In the discovery procedure, the target UE learns identification information of the auxiliary UE. The target UE sends the identification information of the auxiliary UE to the LMF #1.

Specifically, the identification information of the auxiliary UE may be a subscription concealed identifier (subscription concealed identifier, SUCI), a generic public subscription identity (generic public subscription identity, GPSI), or an application layer identifier.

Step S612 is optional.

Step S614: The LMF #1 determines a ranging mode #4 and a location method #1 based on at least one of the location accuracy #4, the response time #4, and the location quality of service class #4. The ranging mode #4 is used for ranging between the target UE and the auxiliary UE, and the location method #1 is used for locating the auxiliary UE.

A plurality of location methods may include multi-cell round trip time (Multi-Round Trip Time, Multi-RTT), downlink time difference of arrival (Downlink time difference of arrival, DL-TDOA), uplink time difference of arrival (Uplink time difference of arrival, UL-TDOA), and the like.

Specifically, the LMF #1 may determine the ranging mode #4 and the location method #1 based on a plurality of methods.

Mode 1: The LMF #1 may determine the ranging mode #4 and the location method #1 based on at least one of the location accuracy #4, the response time #4, and the location quality of service class #4.

For example, the LMF #1 may determine the ranging mode #4 and the location method #1 based on a correspondence or a mapping table between at least one of the location accuracy #4, the response time #4, and the location quality of service class #4 and a ranging mode and a location method that need to be used. The correspondence may be preconfigured by the LMF #1, as shown in Table 4.

**Table 4**

| Location method #1 | Ranging mode #4 | Location accuracy #4 (m) | Response time #4 (s) | Location quality of service level #4 |
|---|---|---|---|---|
| DL-TDOA | Single-side two-way ranging | 2 | 5 | Non-strict level |
| UL-TDOA | Single-side two-way ranging | 1 | 6 | Best effort class |
| Multi-RTT | Double-side two-way ranging | 0.5 | 7 | Strict level |
| Multi-RTT | Double-side two-way ranging | 0.2 | 8 | Assured class |

The correspondence or the mapping table may be locally preconfigured or obtained from a core network element (for example, a PCF).

For example, if ranging accuracy #1 is 1 meter (1m), and latency time of response time #1 is 6s, it may be determined that the ranging mode #4 is the single-side two-way ranging; or if ranging accuracy #1 is 0.5 meters (0.5m), and latency time of response time #1 is 7s, it may be determined that the ranging mode #4 is the double-side two-way ranging.

Alternatively, if the ranging accuracy #1 is 1 meter (1m), it may be determined that the ranging mode #4 is the single-side two-way ranging; or if the ranging accuracy #1 is 0.5 meters (0.5m), it may be determined that the ranging mode #4 is the double-side two-way ranging.

Alternatively, if the latency time of the response time #1 is 6s, it may be determined that the ranging mode #4 is the single-side two-way ranging; or if the latency time of the response time #4 is 7s, it may be determined that the ranging mode #4 is the double-side two-way ranging.

Alternatively, if a location quality of service level #1 is a non-strict level, it may be determined that the ranging mode #4 is the single-side two-way ranging mode; or if a location quality of service level #1 is a strict level, it may be determined that the ranging mode #4 is the double-side two-way ranging mode.

Mode 2: The LMF #1 determines the ranging mode #4 based on a ranging capability of the target UE and a ranging capability of the auxiliary UE.

Specifically, the ranging capability of the target UE indicates a ranging mode supported by the target UE, and the ranging capability of the auxiliary UE indicates a ranging mode supported by the auxiliary UE.

For example, if the ranging mode supported by the target UE includes the single-side two-way ranging and the double-side two-way ranging, and the ranging mode supported by the auxiliary UE includes the single-side two-way ranging, it may be determined that the ranging mode #4 is the single-side two-way ranging.

Mode 3: The LMF #1 determines the ranging mode #4 based on a ranging mode authorized by the target UE and a ranging mode authorized by the auxiliary UE.

For example, if the ranging mode authorized by the target UE includes the single-side two-way ranging and the double-side two-way ranging, and the ranging mode authorized by the auxiliary UE includes the single-side two-way ranging, it may be determined that the ranging mode #4 is the single-side two-way ranging.

Specifically, the LMF #1 may determine the ranging mode #4 based on at least one of the foregoing mode 1, mode 2, and mode 3.

Specifically, the LMF #1 may determine the location method #1 based on the ranging accuracy #4 and/or the response time #4 and/or the LCS QoS Class.

Step S616: The LMF #1 sends the determined ranging mode #4 to the target UE.

Specifically, the LMF #1 may further send the identification information of the auxiliary UE to the target UE.

Specifically, the ranging mode #4 may be carried in a downlink positioning message (downlink positioning message) sent by the LMF #1 to the target UE, or may be carried in an LCS period-triggered invoke request message (LCS period-triggered invoke request message).

Optionally, in step S618, the LMF #1 sends the determined ranging mode #4 to the auxiliary UE.

Specifically, the LMF #1 may further send the identification information of the target UE to the auxiliary UE.

Step S620: The target UE and the auxiliary UE perform ranging based on the ranging mode #4.

For example, if the ranging mode #4 determined by the LMF #1 is the single-side two-way ranging, the target UE sends an initial ranging signal 1, and after receiving the initial ranging signal 1, the auxiliary UE sends, to the target UE, a feedback ranging signal 2 used for feedback. After receiving the feedback ranging signal 2, the target UE calculates a time difference 1 between sending of the initial ranging signal 1 and receiving of the feedback ranging signal 2. The auxiliary UE calculates a time difference 2 between receiving of the initial ranging signal 1 and sending of the feedback ranging signal 2, and feeds back information about the time difference 2 to the target UE.

For example, if the ranging mode #4 determined by the LMF #1 is the double-side two-way ranging, the target UE sends an initial ranging signal 1, and after receiving the initial ranging signal 1, the auxiliary UE sends, to the target UE, a feedback ranging signal 2 used for feedback. After receiving the feedback ranging signal 2, the target UE sends a response ranging signal 3 to the auxiliary UE. The target UE calculates a time difference 1 between sending of the initial ranging signal 1 and receiving of the feedback ranging signal 2, and a time difference 3 between sending of the response ranging signal 3 and the receiving of the feedback ranging signal 2. The auxiliary UE calculates a time difference 2 between receiving of the initial ranging signal 1 and sending of the feedback ranging signal 2, and a time difference 4 between the sending of the feedback ranging signal 2 and receiving of the response ranging signal 3, and feeds back information about the time difference 2 and the time difference 4 to the target UE.

Step S622: The target UE feeds back a ranging result or ranging measurement data to the LMF #1.

Step S624: The LMF #1 sends the determined location method #1 to an LMF #2. The LMF #2 is an LMF serving the auxiliary UE.

Specifically, the LMF #1 may first send the location method #1 to an AMF serving the auxiliary UE, and then the AMF serving the auxiliary UE sends the location method #1 to the LMF #2. Alternatively, the LMF #1 may first send the location method #1 to a GMLC, the GMLC sends the location method #1 to the AMF serving the auxiliary UE, and then the AMF serving the auxiliary UE sends the location method #1 to the LMF #2. The LMF #2 may locate the auxiliary UE based on the location method #1, and calculate location data of the auxiliary UE.

Optionally, the auxiliary UE may alternatively be deployed by an operator, and a location of the auxiliary UE is fixed. Therefore, the location of the auxiliary UE is known to the LMF #1, and the auxiliary UE does not need to be located.

Step S626: The LMF #2 feeds back a location result of the auxiliary UE to the LMF #1.

It should be understood that steps S624 and S626 are optional. When the LMF #1 knows the location of the auxiliary UE (for example, the LMF #1 preconfigures the location of the auxiliary UE, or the LMF #1 executes a location procedure of the auxiliary UE before step S612), steps S624 and S626 may not be performed. Correspondingly, in step S614, the LMF #1 does not need to determine the location method #1 or a parameter #5 (that is, step S614 may be replaced with determining the ranging mode #4 or a parameter #4).

Step S628: The LMF #1 calculates a location of the target UE based on the ranging result fed back in step S622 and the location result fed back in step S626, and feeds back a calculation result to a location service client (location service client, LCS client) or the AMF #1.

In addition, the LMF #1 may further calculate actual location accuracy of the target UE based on actual ranging accuracy of the ranging mode #4 and actual ranging accuracy of the location method #1. The actual location accuracy may be used for adjusting a ranging mode and a location method.

Optionally, if the actual location accuracy of the target UE cannot meet the location accuracy #4, the LMF #1 may further perform step S614, that is, the LMF #1 determines the ranging mode #4 and the location method #1. It should be understood that the LMF #1 updates the ranging mode #4 and the location method #1, and tries to meet the location accuracy #4.

Optionally, if the actual location accuracy of the target UE cannot meet the location accuracy #4, the LMF #1 may further perform step S612, to trigger the target UE to reselect the auxiliary UE, and then perform steps S614 to S628.

In addition, the LMF #1 may obtain the actual ranging accuracy of the ranging mode #4 from the target UE or the auxiliary UE, or the LMF #1 may obtain the actual location accuracy of the location method #1 from the auxiliary UE or the LMF #2.

Alternatively, the LMF #1 in step S614 may determine the parameter #4 and the location method #1 based on at least one of the location accuracy #4, the response time #4, and the location quality of service class #4; or the LMF #1 may determine the ranging mode #4 and the parameter #5 based on at least one of the location accuracy #4, the response time #4, and the location quality of service class #4; or the LMF #1 may determine the parameter #4 and the parameter #5 based on at least one of the location accuracy #4, the response time #4, and the location quality of service class #4. The parameter #4 may be used for determining the ranging mode #4, and the parameter #5 may be used for determining the location method #1. Specifically, the parameter #4 may include at least one of ranging accuracy #5, response time #5, and a ranging quality of service class #5, and the parameter #5 may include at least one of location accuracy #6, response time #5, and a location quality of service class #6.

Specifically, the ranging accuracy #5 and the location accuracy #6 may be higher than the location accuracy #4, latency time of the response time #5 and the response time #5 may be lower than that of the response time #4, and quality of service levels of the ranging quality of service class #5 and the location quality of service class #6 may be higher than a quality of service level of the location quality of service class #4.

It should be understood that, when the LMF #1 knows the location of the auxiliary UE (for example, the LMF #1 preconfigures the location of the auxiliary UE, or the LMF #1 executes the location procedure of the auxiliary UE before step S516), the LMF #1 does not need to determine the location method #1 or the parameter #5 (that is, step S614 may be replaced with determining the ranging mode #4 or the parameter #4).

When the LMF #1 determines the parameter #4 and the location method #1 based on at least one of the location accuracy #4, the response time #4, and the location quality of service class #4, step S616 may be replaced with that the LMF #1 sends the parameter #4 to the target UE, and the target UE determines the ranging mode #4 based on the parameter #4; and step S618 may be replaced with that the LMF #1 sends the parameter #4 to the auxiliary UE, and the auxiliary UE determines the ranging mode #4 based on the parameter #4.

When the LMF #1 determines the ranging mode #4 and the parameter #5 based on at least one of the location accuracy #4, the response time #4, and the location quality of service class #4, step S624 may be replaced with that the LMF #1 sends the parameter #5 to the LMF #2, and the LMF #2 determines the location method #1 based on the parameter #5.

When the LMF #1 determines the parameter #4 and the parameter #5 based on at least one of the location accuracy #4, the response time #4, and the location quality of service class #4, step S616 may be replaced with that the LMF #1 sends the parameter #4 to the target UE, and the target UE determines the ranging mode #4 based on the parameter #4; step S618 may be replaced with that the LMF #1 sends the parameter #4 to the auxiliary UE, and the auxiliary UE determines the ranging mode #4 based on the parameter #4; and step S624 may be replaced with that the LMF #1 sends the parameter #5 to the LMF #2, and the LMF #2 determines the location method #1 based on the parameter #5.

When a location measurement result of the target UE cannot meet a requirement of a location service, the foregoing method for introducing the auxiliary UE is used, so that an LMF network element can efficiently determine, based on an actual requirement of the location service or based on the ranging mode authorized by the target UE and the ranging mode authorized by the auxiliary UE or based on information about the ranging capability of the target UE and information about the ranging capability of the auxiliary UE, a ranging mode that meets the requirement.

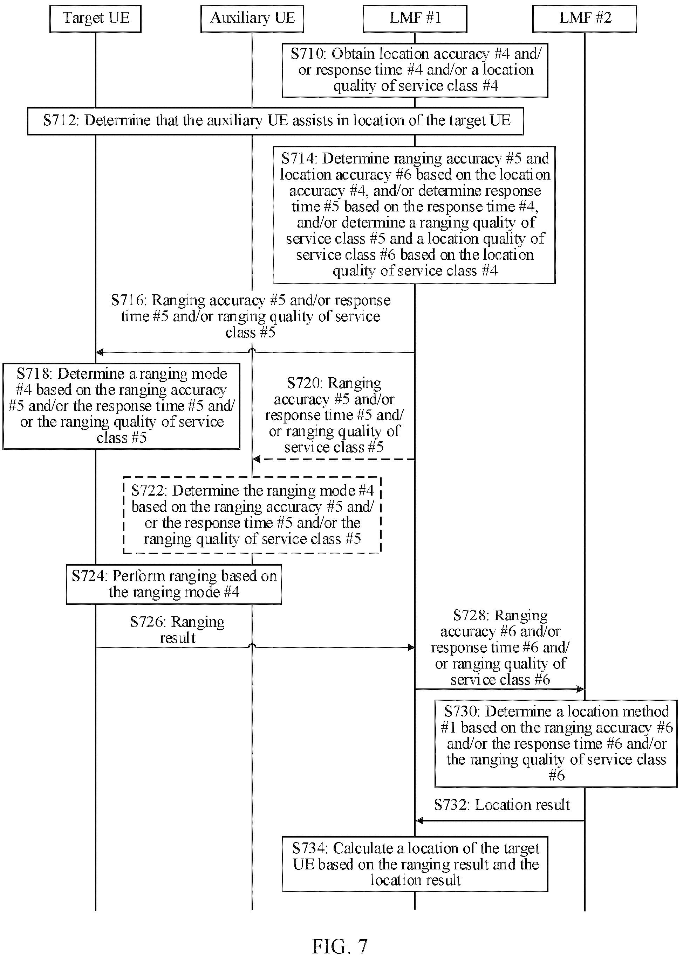

In addition to the method shown in FIG. 6, this application may further provide another method for determining a ranging mode when a location measurement result of a target UE cannot meet a requirement of a location service, as shown in FIG. 7. This embodiment is applicable to a network assisted sidelink positioning (network assisted sidelink positioning) scenario.

For step S710 to step S712, refer to step S610 to step S612. Details are not described herein again.

Step S714: An LMF #1 determines ranging accuracy #5 and location accuracy #6 based on location accuracy #4.

Specifically, the ranging accuracy #5 and the location accuracy #6 are higher than the location accuracy #4.

Specifically, the ranging accuracy #5 may be considered as a threshold #9, and the threshold #9 represents a minimum value of an accuracy requirement of ranging between the target UE and an auxiliary UE; and the location accuracy #6 may be considered as a threshold #10, and the threshold #10 represents a minimum value of a location accuracy requirement of the auxiliary UE.

Alternatively, the LMF #1 may determine response time #5 based on response time #4, where latency time of the response time #5 is less than that of the response time #4. The response time #5 may be considered as a threshold #11, and the threshold #11 may represent a maximum value of latency time of the ranging between the target UE and the auxiliary UE.

Alternatively, the LMF #1 may determine response time #5 and response time #6 based on the response time #4, where latency time of the response time #5 and latency time of the response time #6 are less than latency time of the response time #4. The response time #6 may be considered as a threshold #12, and the threshold #12 may represent a maximum value of latency time of location time of the auxiliary UE.

Alternatively, UE 1 may determine a ranging quality of service class #5 and a location quality of service class #6 based on a location quality of service class #4, where quality of service levels of the ranging quality of service class #5 and the location quality of service class #6 are higher than a quality of service level of the location quality of service class #4.

Step S716: The LMF #1 sends at least one of the determined ranging accuracy #5, response time #5, and ranging quality of service class #5 to the target UE.

Specifically, the LMF #1 may further send identification information of the auxiliary UE to the target UE.

Optionally, the LMF #1 may further send at least one of the determined ranging accuracy #5, response time #5, and ranging quality of service class #5 to the auxiliary UE, and the auxiliary UE determines a ranging mode #4 based on at least one of the ranging accuracy #5, the response time #5, and the ranging quality of service class #5.

Optionally, the LMF #1 may further send identification information of the target UE to the auxiliary UE.

Optionally, the LMF #1 may determine the ranging mode #4 based on at least one of the ranging accuracy #5, the response time #5, and the ranging quality of service class #5, and send the ranging mode #4 to the target UE or the auxiliary UE.

Step S718: The target UE determines the ranging mode #4 based on at least one of the ranging accuracy #5, the response time #5, and the ranging quality of service class #5.

For example, the target UE may determine the ranging mode #4 based on a correspondence between the ranging mode that needs to be used and at least one of the ranging accuracy #5, the response time #5, and the ranging quality of service class #5. The correspondence may be preconfigured by the target UE, the auxiliary UE, or the LMF #1, as shown in Table 5.

**Table 5**

| Ranging mode #4 | Ranging accuracy #5 (m) | Response time #5 (s) | Ranging quality of service level #5 |
|---|---|---|---|
| Single-side two-way ranging | 2 | 5 | Low latency class |
| Single-side two-way ranging | 1 | 6 | Best effort class |
| Double-side two-way ranging | 0.5 | 7 | High latency class |
| Double-side two-way ranging | 0.2 | 8 | Assured class |

The correspondence or the mapping table may be locally preconfigured or obtained from a core network element (for example, a PCF).

Step S724: The target UE and the auxiliary UE perform ranging based on the ranging mode #4.

For example, if the ranging mode #4 determined by the LMF #1 is the single-side two-way ranging, the target UE sends an initial ranging signal 1, and after receiving the initial ranging signal 1, the auxiliary UE sends, to the target UE, a feedback ranging signal 2 used for feedback. After receiving the feedback ranging signal 2, the target UE calculates a time difference 1 between sending of the initial ranging signal 1 and receiving of the feedback ranging signal 2. The auxiliary UE calculates a time difference 2 between receiving of the initial ranging signal 1 and sending of the feedback ranging signal 2, and feeds back information about the time difference 2 to the target UE.

For example, if the ranging mode #4 determined by the LMF #1 is the double-side two-way ranging, the target UE sends an initial ranging signal 1, and after receiving the initial ranging signal 1, the auxiliary UE sends, to the target UE, a feedback ranging signal 2 used for feedback. After receiving the feedback ranging signal 2, the target UE sends a response ranging signal 3 to the auxiliary UE. The target UE calculates a time difference 1 between sending of the initial ranging signal 1 and receiving of the feedback ranging signal 2, and a time difference 3 between sending of the response ranging signal 3 and the receiving of the feedback ranging signal 2. The auxiliary UE calculates a time difference 2 between receiving of the initial ranging signal 1 and sending of the feedback ranging signal 2, and a time difference 4 between the sending of the feedback ranging signal 2 and receiving of the response ranging signal 3, and feeds back information about the time difference 2 and the time difference 4 to the target UE.

Step S726: The target UE feeds back a ranging result or ranging measurement data to the LMF #1.

Step S728: The LMF #1 sends at least one of the location accuracy #6, the response time #6, and the location quality of service class #6 to an LMF #2.

Step S730: The LMF #2 may determine a location method #1 based on at least one of the location accuracy #6, the response time #6, and the location quality of service class #6.

For example, the LMF #2 may determine the location method #1 based on a correspondence or a mapping table between the location method #1 that needs to be used and at least one of the location accuracy #6, the response time #6, and the location quality of service class #6. The correspondence may be preconfigured by the LMF #1 or the LMF #2, as shown in Table 6.

**Table 6**

| Location method #1 | Location accuracy #6 (m) | Response time #4 (s) | Location quality of service level #6 |
|---|---|---|---|
| DL-TDOA | 2 | 5 | Non-strict level |
| UL-TDOA | 1 | 6 | Best effort class |
| Multi-RTT | 0.5 | 7 | Strict class |
| Multi-RTT | 0.2 | 8 | Assured class |

The correspondence or the mapping table may be locally preconfigured or obtained from a core network element (for example, a PCF).

Optionally, the auxiliary UE may alternatively be deployed by an operator, and a location of the auxiliary UE is fixed. Therefore, the location of the auxiliary UE is known to the LMF #1, and the auxiliary UE does not need to be located.

The LMF #2 may locate the auxiliary UE based on the location method #1, and calculate location data of the auxiliary UE.

Step S732: The LMF #2 feeds back a location result of the auxiliary UE to the LMF #1.

It should be understood that steps S728, S730, and S732 are optional. When the LMF #1 knows the location of the auxiliary UE (for example, the LMF #1 preconfigures the location of the auxiliary UE, or the LMF #1 executes a location procedure of the auxiliary UE before step S712), steps S728, S730, and S732 may not be performed. Correspondingly, in step S714, the LMF #1 does not need to determine ranging accuracy #6, the response time #6, or a ranging quality of service class #6 (that is, step S714 may be replaced with determining the ranging accuracy #5, the response time #5, or the ranging quality of service class #5).

Step S734: The LMF #1 calculates a location of the target UE based on the ranging result or the ranging measurement data fed back in step S726 and the location result fed back in step S732, and feeds back a calculation result to a location service client (location service client, LCS client) or an AMF #1.

In addition, the LMF #1 may further calculate actual location accuracy of the UE 1 based on actual ranging accuracy of the ranging mode #4 and actual ranging accuracy of the location method #1. The actual location accuracy may be used for adjusting a ranging mode and a location method.

Optionally, if the actual location accuracy of the target UE cannot meet the location accuracy #4, the LMF #1 may further perform step S714 to step S728 to redetermine a ranging mode #4 and a location method #1. It should be understood that the LMF #1 updates the ranging mode #4 and the location method #1, and tries to meet the location accuracy #4.

Optionally, if the actual location accuracy of the UE 1 cannot meet the location accuracy #4, the LMF #1 may further perform step S712, to trigger the target UE to reselect the auxiliary UE, and then perform steps S714 to S728.

In addition, the LMF #1 may obtain the actual ranging accuracy of the ranging mode #4 from the target UE or the auxiliary UE, or the LMF #1 may obtain the actual location accuracy of the location method #1 from the auxiliary UE.

When the location measurement result of the target UE cannot meet the requirement of the location service, the foregoing method for introducing the auxiliary UE is used, so that an LMF network element can properly set location accuracy and response time for the auxiliary UE, and ranging accuracy and response time for the ranging between the target UE and the auxiliary UE. Therefore, a finally determined ranging mode and location method meet the requirement of the location service as much as possible.

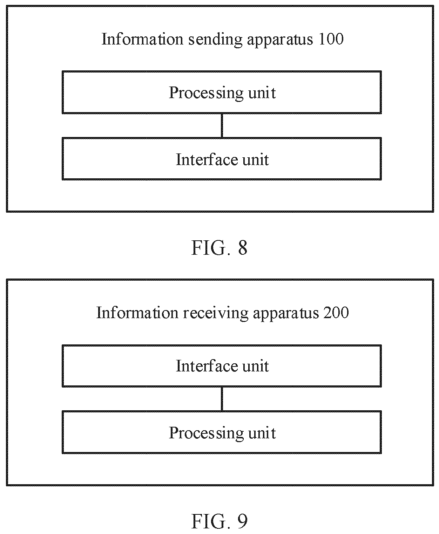

FIG. 8 is a block diagram of an information sending apparatus 100 according to an embodiment of this application. The information sending apparatus 100 may correspond to (for example, may be configured as or may be) the PCF, the UE 1, the UE 2, the auxiliary UE, the target UE, the LMF #1, the LMF #2, and the application layer of the LMF/UE 3/UE 1 described in the embodiments of FIG. 3, FIG. 4, FIG. 5, FIG. 6, and FIG. 7. In addition, modules or units in the information sending apparatus 100 are respectively configured to perform actions or processing processes performed by the PCF, the UE 1, the UE 2, the auxiliary UE, the target UE, the LMF #1, the LMF #2, and the application layer of the LMF/UE 3/UE 1 described in the embodiments in FIG. 3, FIG. 4, FIG. 5, FIG. 6, and FIG. 7. To avoid repetition, detailed descriptions thereof are omitted herein.

In this embodiment of this application, the apparatus 100 may be the PCF, the UE 1, the UE 2, the auxiliary UE, the target UE, the LMF #1, the LMF #2, and the application layer of the LMF/UE 3/UE 1 described in the embodiments of FIG. 3, FIG. 4, FIG. 5, FIG. 6, and FIG. 7. In this case, the apparatus 100 may include: a processor and a transceiver, where the processor is communicatively connected to the transceiver.

Optionally, the apparatus further includes a memory, where the memory is communicatively connected to the processor. Optionally, the processor, the memory, and the transceiver may be communicatively connected to each other. The memory may be configured to store a program or instructions. The processor is configured to execute the program or the instructions stored in the memory, to control the transceiver to send information or a signal.

In this case, an interface unit in the apparatus 100 shown in FIG. 8 may correspond to the transceiver, and a processing unit in the apparatus 100 shown in FIG. 8 may correspond to the processor.

In this embodiment of this application, the apparatus 100 may be a chip (or a chip system) installed in the PCF, the UE 1, the UE 2, the auxiliary UE, the target UE, the LMF #1, the LMF #2, and the application layer of the LMF/UE 3/UE 1 described in the embodiments of FIG. 3, FIG. 4, FIG. 5, FIG. 6, and FIG. 7. In this case, the apparatus 100 may include: a processor and an input/output interface. The processor may be communicatively connected to a transceiver of the PCF, the UE 1, the UE 2, the auxiliary UE, the target UE, the LMF #1, the LMF #2, and the application layer of the LMF/UE 3/UE 1 described in the embodiments in FIG. 3, FIG. 4, FIG. 5, FIG. 6, and FIG. 7 through the input/output interface. Optionally, the apparatus further includes a memory, where the memory is communicatively connected to the processor. Optionally, the processor, the memory, and the transceiver may be communicatively connected to each other. The memory may be configured to store a program or instructions. The processor is configured to execute the program or the instructions stored in the memory, to control the transceiver to send information or a signal.

In this case, an interface unit in the apparatus 100 shown in FIG. 8 may correspond to the input/output interface, and a processing unit in the apparatus 100 shown in FIG. 8 may correspond to the processor.

FIG. 9 is a block diagram of an information receiving apparatus 200 according to an embodiment of this application. The information receiving apparatus 200 may correspond to (for example, may be configured to implement) the PCF, the UE 1, the UE 2, the auxiliary UE, the target UE, the LMF #1, the LMF #2, and the application layer of the LMF/UE 3/UE 1 described in the embodiments of FIG. 3, FIG. 4, FIG. 5, FIG. 6, and FIG. 7. In addition, modules or units in the information receiving apparatus 200 are respectively configured to perform actions or processing processes performed by the PCF, the UE 1, the UE 2, the auxiliary UE, the target UE, the LMF #1, the LMF #2, and the application layer of the LMF/UE 3/UE 1 described in the embodiments in FIG. 3, FIG. 4, FIG. 5, FIG. 6, and FIG. 7. To avoid repetition, detailed descriptions thereof are omitted herein.

In this embodiment of this application, the apparatus 200 may be the PCF, the UE 1, the UE 2, the auxiliary UE, the target UE, the LMF #1, the LMF #2, and the application layer of the LMF/UE 3/UE 1 described in the embodiments of FIG. 3, FIG. 4, FIG. 5, FIG. 6, and FIG. 7. In this case, the apparatus 200 may include a processor and a transceiver, where the processor is communicatively connected to the transceiver. Optionally, the apparatus further includes a memory, where the memory is communicatively connected to the processor. Optionally, the processor, the memory, and the transceiver may be communicatively connected to each other. The memory may be configured to store a program or instructions. The processor is configured to execute the program or the instructions stored in the memory, to control the transceiver to receive information or a signal.

In this case, an interface unit in the apparatus 200 shown in FIG. 9 may correspond to the transceiver, and a processing unit in the apparatus 200 shown in FIG. 9 may correspond to the processor.

In this embodiment of this application, the apparatus 200 may be a chip (or a chip system) installed in the PCF, the UE 1, the UE 2, the auxiliary UE, the target UE, the LMF #1, the LMF #2, and the application layer of the LMF/UE 3/UE 1 described in the embodiments of FIG. 3, FIG. 4, FIG. 5, FIG. 6, and FIG. 7. In this case, the apparatus 200 may include: a processor and an input/output interface. The processor may be communicatively connected to a transceiver of the PCF, the UE 1, the UE 2, the auxiliary UE, the target UE, the LMF #1, the LMF #2, and the application layer of the LMF/UE 3/UE 1 described in the embodiments in FIG. 3, FIG. 4, FIG. 5, FIG. 6, and FIG. 7 through the input/output interface. Optionally, the apparatus further includes a memory, where the memory is communicatively connected to the processor. Optionally, the processor, the memory, and the transceiver may be communicatively connected to each other. The memory may be configured to store a program or instructions. The processor is configured to execute the program or the instructions stored in the memory, to control the transceiver to receive information or a signal.

In this case, an interface unit in the apparatus 200 shown in FIG. 9 may correspond to the input interface, and a processing unit in the apparatus 200 shown in FIG. 9 may correspond to the processor.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for the particular application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in one computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for instructing a computing device (which may be a personal computer, a server, a network device, or the like) to perform a part or all of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the scope of the protection of this application. Any variation or replacement readily figured out by a person skilled in the art within the technical scope disclosed in this application shall fall within the scope of the protection of this application. Therefore, the scope of the protection of this application shall be subject to the scope of the protection of the claims.

## Claims

1. A communication method, comprising:
obtaining, by a first terminal device, a first parameter, wherein the first parameter comprises at least one of first ranging accuracy, first ranging time, and a ranging quality of service class, and the first parameter is used for ranging between the first terminal device and a second terminal device;
determining, by the first terminal device, a first ranging mode from a plurality of ranging modes based on the first parameter; and
performing, by the first terminal device, ranging between the first terminal device and the second terminal device based on the first ranging mode.

2. The method according to claim 1, wherein the method further comprises:
receiving, by the first terminal device, a first message, wherein the first message comprises the first parameter.

3. The method according to claim 1 or 2, wherein the plurality of ranging modes comprise at least one of single-side two-way ranging and double-side two-way ranging.

4. The method according to claim 1 or 2, wherein the determining, by the first terminal device, a first ranging mode from a plurality of ranging modes based on the first parameter further comprises:
obtaining, by the first terminal device, a second parameter, wherein the second parameter comprises at least one of a ranging mode authorized by a network to the first terminal device, a ranging mode authorized by the network to the second terminal device, a ranging mode supported by the first terminal device, or a ranging mode supported by the second terminal device; and
determining, by the first terminal device, the first ranging mode based on the first parameter and the second parameter.

5. The method according to claim 4, wherein when the second parameter comprises the ranging mode authorized by the network to the first terminal device, the method further comprises:
receiving, by the first terminal device, a second message, wherein the second message comprises the second parameter.

6. The method according to claim 4, wherein when the second parameter comprises the ranging mode supported by the second terminal device and/or the ranging mode authorized by the network to the second terminal device, the method further comprises:
receiving, by the first terminal device, a third message of the second terminal device, wherein the third message comprises the second parameter.

7. The method according to any one of claims 1 to 6, wherein the determining, by the first terminal device, a first ranging mode from a plurality of ranging modes based on the first parameter further comprises:
determining, by the first terminal device, the first ranging mode from the plurality of ranging modes based on the first parameter and a ranging result, wherein the ranging result is obtained based on a second ranging mode, and the second ranging mode is determined based on the first parameter.

8. A communication method, wherein the method comprises:
obtaining, by a first terminal device, a third parameter, wherein the third parameter comprises at least one of second ranging accuracy, second ranging time, and a ranging quality of service class, and the third parameter is used for ranging between the first terminal device and a third terminal device;
determining, by the first terminal device, a fourth parameter or a third ranging mode based on the third parameter, wherein the fourth parameter is used for determining the third ranging mode, and the third ranging mode is used for ranging between a second terminal device and the third terminal device; and
sending, by the first terminal device, the third ranging mode or the fourth parameter to the second terminal device or the third terminal device.

9. The method according to claim 8, wherein the method further comprises:
receiving, by the first terminal device, a fourth message, wherein the fourth message comprises the third parameter.

10. The method according to claim 8 or 9, wherein when the third parameter comprises the second ranging accuracy, the determining, by the first terminal device, a third ranging mode based on the third parameter comprises:
determining, by the first terminal device, third ranging accuracy based on the second ranging accuracy; and
determining, by the first terminal device, the third ranging mode from a plurality of ranging modes based on the third ranging accuracy.

11. The method according to any one of claims 8 to 10, wherein when the third parameter comprises the second ranging time, the determining, by the first terminal device, a third ranging mode based on the third parameter comprises:
determining, by the first terminal device, third ranging time based on the second ranging time; and
determining, by the first terminal device, the third ranging mode from a plurality of ranging modes based on the third ranging time.

12. The method according to any one of claims 8 to 11, wherein the method further comprises:
determining, by the first terminal device, a fifth parameter or a fourth ranging mode based on the third parameter, wherein the fifth parameter is used for determining the fourth ranging mode, and the fourth ranging mode is used for ranging between the first terminal device and the second terminal device.

13. The method according to claim 12, wherein the method further comprises:
sending, by the first terminal device, the fifth parameter or the fourth ranging mode to the second terminal device; and
receiving, by the first terminal device, a ranging result obtained by the second terminal device based on the fifth parameter or the fourth ranging mode.

14. The method according to claim 12 or 13, wherein when the third parameter comprises the second ranging accuracy, the determining, by the first terminal device, a fourth ranging mode based on the third parameter comprises:
determining, by the first terminal device, fourth ranging accuracy based on the second ranging accuracy; and
determining, by the first terminal device, the fourth ranging mode from a plurality of ranging modes based on the fourth ranging accuracy.

15. The method according to any one of claims 12 to 14, wherein when the third parameter comprises the second ranging time, the determining, by the first terminal device, a fourth ranging mode based on the third parameter comprises:
determining, by the first terminal device, the fourth ranging mode from a plurality of ranging modes based on the second ranging time.

16. The method according to claim 11 or 15, wherein the plurality of ranging modes comprise at least one of single-side two-way ranging and double-side two-way ranging.

17. The method according to any one of claims 8 to 16, wherein the method further comprises:
obtaining, by the first terminal device, fifth ranging accuracy and sixth ranging accuracy, wherein the fifth ranging accuracy is actual ranging accuracy of the ranging between the first terminal device and the second terminal device, and the sixth ranging accuracy is actual ranging accuracy of the ranging between the second terminal device and the third terminal device; and
calculating, by the first terminal device, seventh ranging accuracy based on the fifth ranging accuracy and the sixth ranging accuracy, wherein the seventh ranging accuracy is actual ranging accuracy of the ranging between the first terminal device and the third terminal device.

18. The method according to claim 17, wherein the obtaining, by the first terminal device, fifth ranging accuracy and sixth ranging accuracy comprises:
receiving, by the first terminal device, the fifth ranging accuracy of the second terminal device, and/or receiving, by the first terminal device, the sixth ranging accuracy of the second terminal device or the third terminal device.

19. A communication method, wherein the method comprises:
obtaining, by a first location management network element, a sixth parameter, wherein the sixth parameter comprises at least one of first location accuracy, first location time, and a location quality of service class, and the sixth parameter is used for locating a first terminal device;
determining, by the first location management network element, a seventh parameter or a first ranging mode based on the sixth parameter, wherein the seventh parameter is used for determining the first ranging mode, the first ranging mode is used for ranging between the first terminal device and a second terminal device, and the second terminal device is configured to assist in locating the first terminal device; and
sending, by the first location management network element, the seventh parameter or the first ranging mode.

20. The method according to claim 19, wherein the method further comprises:
receiving, by the first location management network element, a fifth message, wherein the fifth message comprises the sixth parameter.

21. The method according to claim 19 or 20, wherein when the sixth parameter comprises the first location accuracy, the determining, by the first location management network element, a first ranging mode based on the sixth parameter comprises:
determining, by the first location management network element, eighth ranging accuracy based on the first location accuracy; and
determining, by the first location management network element, the first ranging mode from a plurality of ranging modes based on the eighth ranging accuracy.

22. The method according to any one of claims 19 to 21, wherein when the sixth parameter comprises the first location time, the determining, by the first location management network element, a first ranging mode based on the sixth parameter comprises:
determining, by the first location management network element, fourth ranging time based on the first location time; and
determining, by the first location management network element, the first ranging mode from a plurality of ranging modes based on the fourth ranging time.

23. The method according to any one of claims 19 to 22, wherein the method further comprises:
determining, by the first location management network element, an eighth parameter or a first location method based on the sixth parameter, wherein the eighth parameter is used for determining the first location method, and the first location method is used for locating the second terminal device; and
sending, by the first location management network element, the eighth parameter or the first location method.

24. The method according to claim 23, wherein when the sixth parameter comprises the first location accuracy, the determining, by the first location management network element, a first location method based on the sixth parameter comprises:
determining, by the first location management network element, second location accuracy based on the first location accuracy; and
determining, by the first location management network element, the first location method from a plurality of location methods based on the second location accuracy.

25. The method according to claim 23 or 24, wherein when the sixth parameter comprises the first location time, the determining, by the first location management network element, a first location method based on the sixth parameter comprises:
determining, by the first location management network element, the first location method from a plurality of location methods based on the first location time.

26. The method according to any one of claims 21 to 25, wherein the plurality of ranging modes comprise single-side two-way ranging and double-side two-way ranging.

27. The method according to any one of claims 19 to 26, wherein the method further comprises:
obtaining, by the first location management network element, ninth ranging accuracy and third location accuracy, wherein the ninth ranging accuracy is actual ranging accuracy of the ranging between the first terminal device and the second terminal device, and the third location accuracy is actual location accuracy of the second terminal device;
calculating, by the first location management network element, fourth location accuracy based on the ninth ranging accuracy and the third location accuracy, wherein the fourth location accuracy is actual location accuracy of the first terminal device; and
sending, by the first location management network element, the fourth location accuracy to a first mobility management network element, wherein the first mobility management network element is a mobility management network element serving the first terminal device.

28. The method according to claim 27, wherein the obtaining, by the first location management network element, ninth ranging accuracy and third location accuracy comprises:
receiving, by the first location management network element, the ninth ranging accuracy of the first terminal device or the second terminal device, and/or receiving, by the first location management network element, the third location accuracy of a second location management network element, wherein the second location management network element is a location management network element serving the second terminal device.

29. A communication apparatus, comprising:
an interface unit, configured to obtain a first parameter, wherein the first parameter comprises at least one of first ranging accuracy, first ranging time, and a ranging quality of service class, and the first parameter is used for ranging between the apparatus and a second terminal device; and
a processing unit, configured to determine a first ranging mode from a plurality of ranging modes based on the first parameter, wherein
the processing unit is further configured for the ranging between the apparatus and the second terminal device based on the first ranging mode.

30. The apparatus according to claim 29, wherein the interface unit is further configured to receive a first message, wherein the first message comprises the first parameter.

31. The apparatus according to claim 29 or 30, wherein the plurality of ranging modes comprise at least one of single-side two-way ranging or double-side two-way ranging.

32. The apparatus according to claim 29 or 30, wherein that the processing unit is configured to determine the first ranging mode from the plurality of ranging modes based on the first parameter comprises:
the interface unit is further configured to obtain a second parameter, wherein the second parameter comprises at least one of a ranging mode authorized by a network to the apparatus, a ranging mode authorized by the network to the second terminal device, a ranging mode supported by the apparatus, or a ranging mode supported by the second terminal device; and
the processing unit is configured to determine the first ranging mode based on the first parameter and the second parameter.

33. The apparatus according to claim 32, wherein when the second parameter comprises the ranging mode authorized by the network to the apparatus, the interface unit is further configured to receive a second message, wherein the second message comprises the second parameter.

34. The apparatus according to claim 32, wherein when the second parameter comprises the ranging mode supported by the second terminal device and/or the ranging mode authorized by the network to the second terminal device, the interface unit is further configured to receive a third message of the second terminal device, wherein the third message comprises the second parameter.

35. The apparatus according to any one of claims 29 to 34, wherein that the processing unit is configured to determine the first ranging mode from the plurality of ranging modes based on the first parameter further comprises:
the processing unit is configured to determine the first ranging mode from the plurality of ranging modes based on the first parameter and a ranging result, wherein the ranging result is obtained based on a second ranging mode, and the second ranging mode is determined based on the first parameter.

36. A communication apparatus, wherein the apparatus comprises:
an interface unit, configured to obtain a third parameter, wherein the third parameter comprises at least one of second ranging accuracy, second ranging time, and a ranging quality of service class, and the third parameter is used for ranging between the apparatus and a third terminal device; and
a processing unit, configured to determine a fourth parameter or a third ranging mode based on the third parameter, wherein the fourth parameter is used for determining the third ranging mode, and the third ranging mode is used for ranging between a second terminal device and the third terminal device; and
the interface unit is further configured to send the third ranging mode or the fourth parameter to the second terminal device or the third terminal device.

37. The apparatus according to claim 36, wherein the interface unit is further configured to receive a fourth message, wherein the fourth message comprises the third parameter.

38. The apparatus according to claim 36 or 37, wherein when the third parameter comprises the second ranging accuracy, that the processing unit is configured to determine the third ranging mode based on the third parameter comprises:
the processing unit is further configured to determine third ranging accuracy based on the second ranging accuracy; and
the processing unit is further configured to determine the third ranging mode from a plurality of ranging modes based on the third ranging accuracy.

39. The apparatus according to any one of claims 36 to 38, wherein when the third parameter comprises the second ranging time, that the processing unit is configured to determine the third ranging mode based on the third parameter comprises:
the processing unit is further configured to determine third ranging time based on the second ranging time; and
the processing unit is further configured to determine the third ranging mode from a plurality of ranging modes based on the third ranging time.

40. The apparatus according to any one of claims 36 to 39, wherein the processing unit is further configured to determine a fifth parameter or a fourth ranging mode based on the third parameter, the fifth parameter is used for determining the fourth ranging mode, and the fourth ranging mode is used for ranging between the apparatus and the second terminal device.

41. The apparatus according to claim 40, wherein the interface unit is further configured to send the fifth parameter or the fourth ranging mode to the second terminal device; and
the interface unit is further configured to receive a ranging result obtained by the second terminal device based on the fifth parameter or the fourth ranging mode.

42. The apparatus according to claim 40 or 41, wherein when the third parameter comprises the second ranging accuracy, that the processing unit is further configured to determine the fourth ranging mode based on the third parameter comprises:
the processing unit is further configured to determine fourth ranging accuracy based on the second ranging accuracy; and
the processing unit is further configured to determine the fourth ranging mode from a plurality of ranging modes based on the fourth ranging accuracy.

43. The apparatus according to any one of claims 40 to 42, wherein when the third parameter comprises the second ranging time, that the processing unit is further configured to determine the fourth ranging mode based on the third parameter comprises:
the processing unit is further configured to determine the fourth ranging mode from a plurality of ranging modes based on the second ranging time.

44. The apparatus according to claim 39 or 43, wherein the plurality of ranging modes comprise at least one of single-side two-way ranging or double-side two-way ranging.

45. The apparatus according to any one of claims 36 to 44, wherein the interface unit is further configured to obtain fifth ranging accuracy and sixth ranging accuracy, wherein the fifth ranging accuracy is actual ranging accuracy of the ranging between the apparatus and the second terminal device, and the sixth ranging accuracy is actual ranging accuracy of the ranging between the second terminal device and the third terminal device; and
the processing unit is further configured to calculate seventh ranging accuracy based on the fifth ranging accuracy and the sixth ranging accuracy, wherein the seventh ranging accuracy is actual ranging accuracy of the ranging between the apparatus and the third terminal device.

46. The apparatus according to claim 45, wherein that the interface unit is further configured to obtain the fifth ranging accuracy and the sixth ranging accuracy comprises:
the interface unit is further configured to receive the fifth ranging accuracy of the second terminal device, and/or the interface unit is further configured to receive the sixth ranging accuracy of the second terminal device or the third terminal device.

47. A communication apparatus, wherein the apparatus comprises:
an interface unit, configured to obtain a sixth parameter, wherein the sixth parameter comprises at least one of first location accuracy, first location time, and a location quality of service class, and the sixth parameter is used for locating a first terminal device; and
a processing unit, configured to determine a seventh parameter or a first ranging mode based on the sixth parameter, wherein the seventh parameter is used for determining the first ranging mode, the first ranging mode is used for ranging between the first terminal device and a second terminal device, and the second terminal device is configured to assist in locating the first terminal device; and
the interface unit is further configured to send the seventh parameter or the first ranging mode.

48. The apparatus according to claim 47, wherein the interface unit is further configured to receive a fifth message, wherein the fifth message comprises the sixth parameter.

49. The apparatus according to claim 47 or 48, wherein when the sixth parameter comprises the first location accuracy, that the processing unit is configured to determine the first ranging mode based on the sixth parameter comprises:
the processing unit is further configured to determine eighth ranging accuracy based on the first location accuracy; and
the processing unit is further configured to determine the first ranging mode from a plurality of ranging modes based on the eighth ranging accuracy.

50. The apparatus according to any one of claims 47 to 49, wherein when the sixth parameter comprises the first location time, that the processing unit is configured to determine the first ranging mode based on the sixth parameter comprises:
the processing unit is configured to determine fourth ranging time based on the first location time; and
the processing unit is further configured to determine the first ranging mode from a plurality of ranging modes based on the fourth ranging time.

51. The apparatus according to any one of claims 47 to 50, wherein the processing unit is further configured to determine an eighth parameter or a first location method based on the sixth parameter, wherein the eighth parameter is used for determining the first location method, and the first location method is used for locating the second terminal device; and
the interface unit is further configured to send the eighth parameter or the first location method.

52. The apparatus according to claim 51, wherein when the sixth parameter comprises the first location accuracy, that the processing unit is further configured to determine the first location method based on the sixth parameter comprises:
the processing unit is configured to determine second location accuracy based on the first location accuracy; and
the processing unit is further configured to determine the first location method from a plurality of location methods based on the second location accuracy.

53. The apparatus according to claim 51 or 52, wherein when the sixth parameter comprises the first location time, that the processing unit is further configured to determine the first location method based on the sixth parameter comprises:
the processing unit is configured to determine the first location method from a plurality of location methods based on the first location time.

54. The apparatus according to any one of claims 49 to 53, wherein the plurality of ranging modes comprise single-side two-way ranging and double-side two-way ranging.

55. The apparatus according to any one of claims 47 to 54, wherein the interface unit is further configured to obtain ninth ranging accuracy and third location accuracy, wherein the ninth ranging accuracy is actual ranging accuracy of the ranging between the first terminal device and the second terminal device, and the third location accuracy is actual location accuracy of the second terminal device;
the processing unit is further configured to calculate fourth location accuracy based on the ninth ranging accuracy and the third location accuracy, wherein the fourth location accuracy is actual location accuracy of the first terminal device; and
the interface unit is further configured to send the fourth location accuracy to a first mobility management network element, wherein the first mobility management network element is a mobility management network element serving the first terminal device.

56. The apparatus according to claim 55, wherein that the interface unit is further configured to obtain the ninth ranging accuracy and the third location accuracy comprises:
the interface unit is further configured to receive the ninth ranging accuracy of the first terminal device or the second terminal device, and/or the interface unit is further configured to receive the third location accuracy of a second location management network element, wherein the second location management network element is a location management network element serving the second terminal device.

57. A communication apparatus, comprising:
a processor, wherein the processor is coupled to a memory, the memory is configured to store a program or instructions; and when the program or the instructions is/are executed by the processor, the apparatus is enabled to perform the communication method according to any one of claims 1 to 28.

58. A computer-readable storage medium, wherein the computer-readable storage medium stores a computer program; and when the computer program is run on a computer, the computer is enabled to perform the communication method according to any one of claims 1 to 28.

59. A computer program product, comprising computer program code, wherein when the computer program code is run, the communication method according to any one of claims 1 to 28 is implemented.
